# EUROPÄISCHE PATENTSCHRIFT

(11) **EP 0 541 017 B1**
(45) Veröffentlichungstag und Bekanntmachung des Hinweises auf die Patenterteilung: **24.09.1997**
(21) Anmeldenummer: 92118666.4
(22) Anmeldetag: 31.10.1992
(51) Int. Cl.: A01G 9/10, B65D 1/36

(54) **Traggestell**
Carrying frame
Cadre porteur

(30) Priorität: 05.11.1991 DE 9113738 U; 04.12.1991 DE 4139981; 14.02.1992 DE 4204322
(43) Veröffentlichungstag der Anmeldung: 12.05.1993
(73) Patentinhaber: RS technoplant Kunststofftechnik GmbH, 49406 Barnstorf (DE)
(72) Erfinder: Kühling, Franz, W-2842 Lohne (DE)
(74) Vertreter: Müller, Enno, Dipl.-Ing.

(56) Entgegenhaltungen:
- EP-A- 0 317 713
- EP-A- 0 371 888
- BE-A- 787 306
- DE-U- 8 707 860
- FR-A- 2 146 515
- GB-A- 1 592 650
- US-A- 4 802 588

## Beschreibung

Die Erfindung betrifft ein Traggestell mit etwa rechteckigen Einstellöffnungen und dazwischen sich erstreckenden Stegen, zur Aufnahme von inbesondere Pflanztöpfen, wobei die Stege die Einstellöffnungen umfassen und einen Fassungsrand einer Einstellöffnung ausbilden, wobei in einer Ausführungsform die Stege ein einseitiges offenes U-Profil aufweisen und der Fassungsrand einer Einstellöffnung durch einen U-Schenkel des U-Profils gebildet ist.

Ein solches Traggestell ist beispielsweise aus dem Gebrauchsmuster 87 07 860 bekannt. Bei diesem Traggestell sind auch Körbchen ausgebildet durch gurtartige, jedoch nur gering flexible Elemente, die von einem Fassungsrand einer Einstellöffnung ausgehen. Diese Elemente sind sich im Boden des Körbchens kreuzend angeordnet, so daß sie für einen einzustellenden Blumentopf eine untere Begrenzung des Einstellkörbchens darstellen. Eine Anpassungsfähigkeit der Körbchen an unterschiedlich große Blumentöpfe ist begrenzt. Auch können die Blumentöpfe über eine gewisse Tiefe hinaus nicht in das Traggestell bzw. eine Einstellöffnung eingebracht werden.

Andererseits sind aus Styroporschaum gefertigte Tragelemente bekannt, die eine im wesentlichen rechteckige, sich nach unten hin auch konisch verjüngende Form der Einstellöffnungen aufweisen. Die Einstellöffnungen besitzen keinen Boden, sondern an ihrem unteren Ende eine geometrisch gleiche, jedoch im Hinblick auf die Konizität verkleinerte Öffnung. Diese Elemente sind auch insoweit vorteilhaft, als Blumentöpfe von beiden Seiten eingestellt werden können, also auch von der Seite, welche die kleinere (Boden-) Öffnung aufweist. In gewissen Anwendungsfällen kann dies erwünscht sein.

Ausgehend von dem vorbeschriebenen Stand der Technik stellt sich der Erfindung die Aufgabe, ein gebrauchsvorteilhaftes Traggestell anzugeben, das möglichst stabil ist und doch variabel benutzbar ist.

Diese Aufgabe ist bei der im Anspruch 1 angegebenen Erfindung gelöst, wobei darauf abgestellt ist, daß in Öffnungsrichtung des U-Profils und beabstandet hierzu, zugeordnet einer Einstellöffnung, ein Umlaufgurt ausgebildet ist, der gleichfalls eine etwa rechteckige, gegenüber der Einstellöffnung jedoch kleinere Öffnung begrenzt, und daß der Umlaufgurt an das U-Profil über Verbindungsstege, ausgehend von dem Fassungsrand einer Einstellöffnung, angebunden ist. Das Traggestell läßt sich vorteilhaft im Kunststoffspritzverfahren herstellen.

Gleichfalls löst der Gegenstand des Anspruches 2 die vorstehende Aufgabe, wobei darauf abgestellt ist, daß die Stege aus einem geschlossenen, vorzugsweise kreisförmig geschlossenen Hohlprofil gebildet sind, daß aus dem Profil Verbindungsstege herauswachsen und daß beabstandet zu dem Öffnungsrand, zugeordnet eine Einstellöffnung, ein Umlaufgurt ausgebildet ist, der gleichfalls eine etwa rechteckige Öffnung begrenzt und daß der Umlaufgurt über die Verbindungsstege an das Profil angebunden ist. Ein solches Traggestell läßt sich beispielsweise in einem Gasinnendruck-Spritzverfahren vorteilhaft herstellen.

In weiterer Ausgestaltung ist bevorzugt vorgesehen, daß die Verbindungsstege durch gegenüber einem in der Einstellöffnung aufgespannt gedachten regelmäßigen, durch die Eckbereiche der Einstellöffnung begrenzten Rechteck mit unterschiedlichem Abstand angebunden sind. Mit einer Vertikalen schließen solcherart unterschiedlich angebundene Stege unterschiedliche Winkel ein. In weiterer Ausgestaltung ist vorgesehen, daß der Fassungsrand der Einstellöffnung gegenüber dem aufgespannten Rechteck ausladende Bereiche aufweist, welche jeweils etwa seitenmittig zu dem Rechteck ausgebildet sind und von welchen die Verbindungsstege ausgehen. Diese Verbindungsstege sind bevorzugt gleichfalls streifen- bzw. gurtförmig ausgebildet, mit einer dem Inneren der Einstellöffnung zugeordneten Breitseite. Auch gehen die Verbindungsstege weiter bevorzugt einstückig in den gleichfalls streifenförmig ausgebildeten Umlaufgurt über. Diese so ausgebildeten etwa seitenmittigen Verbindungsstege können auch ersetzt sein durch jeweils zwei nah beieinander ausgebildte Verbindungsstege, von denen keiner seitenmittig angeordnet zu sein braucht. Der Umlaufgurt ist so gestaltet, daß er, mit Ausnahme seiner Eckbereiche, in gedachter Verlängerung einen Rechteckkonus erzeugt. Insbesondere dann, wenn man die Verbindungsstege einbezieht. In weiterer bevorzugter Einzelheit ist darüber hinaus vorgesehen, daß öffnungsseitig in dem U-Profil Versteifungsrippen ausgebildet sind, die bezüglich eines Umfassungsrandes jeweils an einem Verbindungssteg, der einem Eckbereich der Einstellöffnung zugeordnet ist, angeformt sind. Durch vergleichsweise wenige Versteifungsrippen ist eine große Steifigkeitsverbesserung erreicht. Randseitig und mittig, wo das Traggestell bevorzugt anzufassen ist, sind bevorzugt die Rippen in enger Nebeneinanderlage quer zur Längserstreckung des U-Profils ausgebildet, um so die Handhabung zu verbessern. Darüber hinas sind die Rippen auch bevorzugt mit einer konkaven Endkrümmung ausgebildet, zur Schaffung einer Greifrinne. Die Eckbereiche der unteren Öffnung können durch ein im wesentlichen dreieckförmiges Bodenteil abgedeckt bzw. geschlossen sein. Auch ist es weiter bevorzugt, daß die Einstellöffnung und Öffnungen praktisch quadratisch ausgebildet sind. Ein umlaufender Außenrand des Traggestells, der gleichfalls durch einen Schenkel des U-Profils gebildet ist, ist bevorzugt mit einer etwa doppelten vertikalen Länge ausgebildet im Vergleich zu einem U-Schenkel im Inneren des Traggestells, - der einen Fassungsrand bildet. Es sind auch bevorzugt Zwischenöffnungen vorgesehen, die im wesentlichen rechtwinklig ausgebildet sind. Weiter bevorzugt handelt es sich um Zwischenöffnungen größerer und kleinerer Öffnungsbreite, wobei die Zwischenöffnungen größerer Öffnungsbreite darüber hinaus bevorzugt in Längsseitenerstreckung des Traggestells in Abfolge hintereinander ausgebildet sind. Eine Länge der Zwischenöffnungen größerer Breite entspricht etwa einer Seitenlänge oder, in einer Alternative der Hälfte einer Seitenlänge einer Einstellöffnung. Die Anordnung und Abmessung einer Zwischenöffnung bzw. der Zwischenöffnungen kommt insbesondere Bedeutung zu im Zusammenhang mit der auch möglichen Benutzbarkeit des Traggestells in umgedrehter Form, so daß sich also die Öffnungen der insgesamt als Einstellkorb zu bezeichnenden Gestaltung der Halterung oben befindet und die Einstellöffnung unten. Für eine solche Benutzbarkeit sind auch die als bekannt vorausgesetzten Styropor-Tragelemente vorgesehen. Bei dieser Art der Benutzung können sowohl in die Öffnungen wie auch in die von jeweils vier Körbchen geschaffenen Zwischenräume ein Blumentopf (in die Zwischenräume dann in aller Regel nur runde Blumentöpfe) eingesetzt werden. Hierbei sind die Maße so gewählt, daß der Diagonalabstand zweier Eckbereiche etwa der Seitenlänge einer Einstellöffnung entspricht, wobei die Begrenzung der so geschaffenen weiteren Einstellmöglichkeit nur durch die nach unten divergierenden (wenn auch nicht zusammentreffenden) Eckstege gegeben ist. Es ist also durch die Eckstege eine Halterungsmöglichkeit zwischen den Körbchen gegeben, die gleichzeitig auch eine kreuzförmige Passage zwischen den Körbchen freiläßt. Hierbei sind die Abstände der sich jeweils gegenüberliegenden, etwa parallel zueinander verlaufenden Gurtbänder gemäß 1:1,3 bzw. 1:1,5 vorgesehen. Der größere Abstand ist in Richtung der Schmalseite verwirklicht. Besonders sinnvoll ist dies bei der erwähnten quadratischen oder im wesentlichen quadratischen Ausbildung einer Einstellöffnung. Eine weitere wesentliche Lehre geht dahin, daß der Außenrand des Traggestells an einem Abschnitt einen rückversetzten Etikettabschnitt ausbildet. Dieser Etikettabschnitt ist bezüglich der Randlinie des Traggestells etwas zurückversetzt, bevorzugt etwa der Dicke eines Außenrandes, also eines Schenkels des U-Profils entsprechend. Bei einer Aufstellung und Verschiebung eines Traggestells mit Randkontakt wird ein hier angebrachtes Etikett nicht berührt. Es ist so besser vor Beschädigungen geschützt. In weiterer Ausgestaltung ist bezüglich des Etikettabschnittes auch bevorzugt, daß dieser in seiner vertikalen Erstreckung länger ist als der Randabschnitt, beispielsweise und bevorzugt doppelt so lang. Aufgrund der Zurückversetzung und eines darüber hinaus bevorzugt noch gewählten abweichenden, spitzeren Winkels zu einer Vertikalen, kann diese Vertikalerstreckung gewählt werden, ohne daß dadurch eine Breiten- oder Längenabmessung des Traggestells beeinflußt wird. Auch ist es zweckmäßig, den genannten Etikettenabschnitt an zwei gegenüberliegenden Seiten des Randbereiches auszubilden, jedoch spiegelbildlich vertauscht. Auch ist bevorzugt vorgesehen, daß in dem U-Profil des Außenrandes eine Stufe ausgebildet ist, welche einen andersartigen Anfassungsbereich gegenüber dem U-Profil bildet. Es kann das stufenartige Profil mit zwei Fingern, etwa von oben und unten gefaßt werden.

Eine weitere besondere Lehre der Erfindung geht auch dahin, daß eine Eckausbildung zweier aufeinander stoßender Seitenlinien der rechteckigen Grundfläche einer Einstellöffnung als zum Inneren der Grundfläche hinweisender Vorsprung gestaltet ist. Die Seitenlinien der rechteckigen Grundfläche treffen sich also nicht unmittelbar, sondern nur in einer gedanklichen Verlängerung. Gegenüber diesem in der gedanklichen Verlängerung der Seitenlinien gegebenen Schnittpunkt ist die Eckausbildung in das Innere der Grundfläche vorragend ausgebildet. In weiterer Ausgestaltung ist vorgesehen, daß der Vorsprung eine nach innen weisende Vorsprungecke ist. An sich könnte dieser Vorsprung beispielsweise auch lediglich als stabförmiges, nach innen weisendes Element gestaltet sein, im Hinblick auf den mit diesem Vorsprung verbundenen Zweck, wie er nachstehend insbesondere im Zusammenhang mit der Zeichnung noch im einzelnen erläutert ist, nämlich in der Einstellöffnung sowohl Blumentöpfe runden wie auch eckigen, insbesondere rechteckigen Querschnittes gesichert aufnehmen zu können. In weiterer Ausgestaltung ist auch vorgesehen, daß die Vorsprungecke unterschiedlich lange Seiten aufweist. Diese Seiten der Vorsprungecke stoßen weiter bevorzugt in einem stumpfen Winkel aufeinander. Hierbei hat es sich als vorteilhaft erwiesen, daß die Längen der Seiten einer Vorsprungecke sich etwa wie 1,5 : 1 verhalten. Demgegenüber beträgt eine Länge einer Begrenzungslinie der eigentlichen Rechtecköffnung etwa das Drei- bis Fünffache der Länge einer Seite der Vorsprungecke. Im einzelnen ist besonders bevorzugt, daß eine solche Begrenzungslinie - bezüglich ihrer freien Länge - etwa die dreifache Länge der größeren Seite der Vorsprungecke besitzt. Hinsichtlich der bodenseitigen Ausgestaltung der Einstellöffnung ist bevorzugt, daß ein Eckbereich einer Einstellöffnung bodenseitig durch eine angeformte Bodenfläche teilweise geschlossen ist. Dies bedeutet, daß bodenseitig die freie Öffnung nicht der nach innen vorspringenden Eckausformung folgt, sondern durch die Bodenfläche geradlinig an der Eckausformung vorbeiführt. Durch die angeformten Flächen ergibt sich somit bodenseitig eine Öffnung, die gleichfalls im wesentlichen rechteckig ist, wobei jedoch die zugeordneten Längsseiten der bodenseitigen Rechtecköffnung zu denen der Einstellöffnung in einem Winkel von etwa 45° verlaufen. Die bodenseitige Rechtecköffnung ist gegenüber dem Rechteck der oberseitigen Einstellöffnung verdreht. Der Drehwinkel beträgt bevorzugt etwa 45°. Insbesondere bei quadratischer Ausführung der oberseitigen Rechtecköffnung wie der bodenseitigen Rechtecköffnung, was bevorzugt ist, würde bei einer 90° Verdrehung entsprechend wieder eine Überdeckung gegeben sein. Bezüglich des bodenseitigen Rechteckes ist in weiterer Ausgestaltung vorgesehen, daß eine Längsseite dieses bodenseitigen Rechtecks beidseitig in eine sich zum Boden der Einstellöffnung als Seitenwand fortsetzende Längsseite des oberen Rechteckes einläuft. Das obere Rechteck, das hier zunächst als geometrische Grundfigur der oberen Einstellöffnung angesprochen ist, ist - in Gestalt der erwähnten Begrenzungslinien - durch den oberen Rand von Seitenwänden gebildet, welche die Einstellöffnung seitlich begrenzen. Diese Seitenwände laufen auch konisch nach unten, zur bodenseitigen Öffnung der Einstellöffnung zu. In eine hierdurch gebildete Seitenwand läuft entsprechend die innere Begrenzungslinie der Bodenflächen, welche teilweise das bodenseitige Rechteck bilden, ein. Hierbei ist es weiter bevorzugt, daß zwei Längsseiten des bodenseitigen Rechteckes, die sich nicht real, sondern in einer gedachten Verlängerung schneiden, derart in die Seitenwand einlaufen, daß die Seitenwand zwischen den beiden Enden dieser Längsseiten die Eckverbindung zwischen diesen Seitenwänden bildet, wobei zwischen der Seitenwand und jeder der Längsseiten jeweils ein stumpfer Winkel eingeschlossen ist.

Nachstehend ist die Erfindung des weiteren anhand der beigefügten Zeichnung, die jedoch lediglich ein Ausführungsbeispiel darstellt, erläutert. Hierbei zeigt:
- Fig. 1: eine Draufsicht auf eine erste Ausführungsform;
- Fig. 2: eine teilweise Seitenansicht des Gegenstandes gemäß Fig. 1;
- Fig. 3: einen teilweisen Querschnitt des Gegenstandes gemäß Fig. 1, geschnitten entlang der Linie III-III;
- Fig. 4: eine ausschnittsweise, vergrößerte Draufsicht des Gegenstandes gemäß Fig. 1;
- Fig. 5: eine Darstellung gemäß Fig. 4, jedoch in Unteransicht des Gegenstandes gemäß Fig. 1;
- Fig. 6: eine perspektivische Teildarstellung des Gegenstandes gemäß Fig. 1;
- Fig. 7: eine Draufsicht auf eine weitere Ausführungsform eines Traggestells;
- Fig. 8: eine Schnittdarstellung durch den Gegenstand gemäß Fig. 7, geschnitten entlang der Linie VIII-VIII;
- Fig. 9: eine teilweise Darstellung in Unteransicht des Gegenstandes gemäß Fig. 7;
- Fig. 10: eine Seitenansicht in Teildarstellung des Gegenstandes gemäß Fig. 7 bzw. Fig. 9;
- Fig. 11: eine perspektivische Teildarstellung des Gegenstandes gemäß Fig. 7;
- Fig. 12: eine perspektivische Teildarstellung gemäß Fig. 11, mit eingesetztem Blumentopf;
- Fig. 13: eine perspektivische Teildarstellung einer weiteren abgewandelten Ausführungsform.
- Fig. 14: eine Draufsicht auf eine weitere Ausführungsform, mit einer besonderen Etikettenaufnahme;

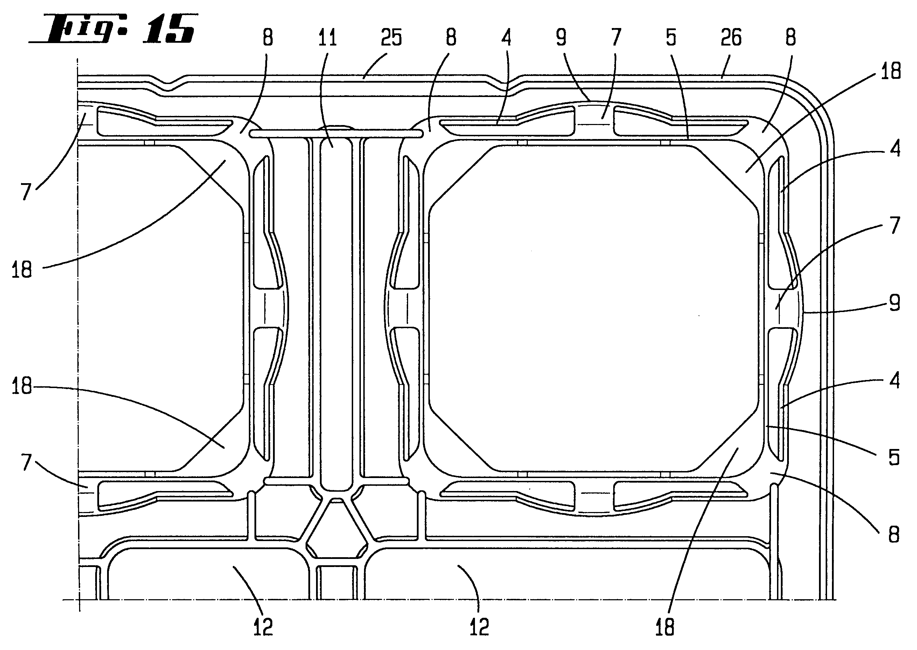

- Fig. 15: eine Unteransicht eines Teilbereichs des Gegenstandes gemäß Fig. 14;
- Fig. 16: zwei Gegenstände gemäß Fig. 14 in übereinandergestapelter Form, geschnitten entlang der Linie XVI-XVI in Fig. 14;
- Fig. 17: eine perspektivische Teildarstellung eines weiteren Traggestells, mit einer Griffmulde;
- Fig. 18: einen Schnitt durch den Gegenstand gem. Fig. 17 entlang der Linie XVIII-XVIII;
- Fig. 19: eine Gesamt-Unteransicht des Gegenstandes gemäß Fig. 14;
- Fig. 20: einen Schnitt durch den Gegenstand gemäß Fig. 19, entlang der Linie XX-XX;
- Fig. 21: einen Querschnitt einer weiteren Ausführungsform, etwa entsprechend Fig. 3, mit geschlossenem Stegprofil;
- Fig. 22: eine Draufsicht auf einen Außenrandausschnitt des Traggestells mit einem alternativen Preisschild-Abschnitt;
- Fig. 23: eine Vorderansicht der Ausgestaltung gemäß Fig. 22;
- Fig. 24: einen Querschnitt durch einen Gegenstand gemäß Fig. 22, entlang der Linie XXIV-XXIV in Fig. 22;
- Fig. 25: eine Draufsicht auf eine weitere Ausführungsform eines Traggestells;
- Fig. 26: eine ausschnittsweise Vergrößerung der Darstellung gemäß Fig. 25;
- Fig. 27: eine Unteransicht des Traggestells gemäß fig. 25;
- Fig. 28: eine stirnseitige Seitenansicht des Traggestells gemäß Fig. 25;
- Fig. 29: einen Schnitt durch das Traggestell gemäß Fig. 25 entlang der Linie V-V (nur teilweise dargestellt);
- Fig. 30: einen Schnitt durch das Traggestell gemäß Fig. 25 entlang der Linie VI-VI (nur teilweise dargestellt).

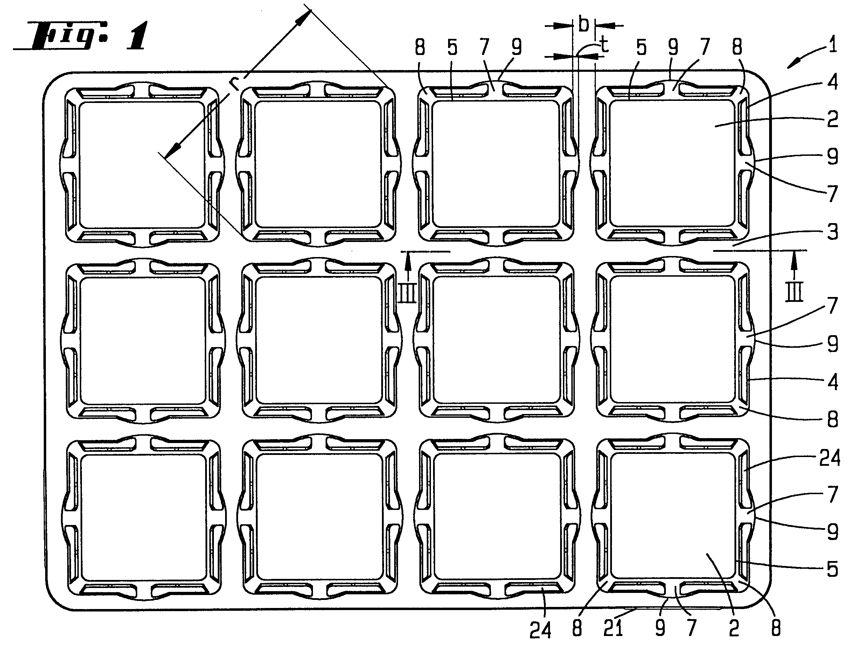

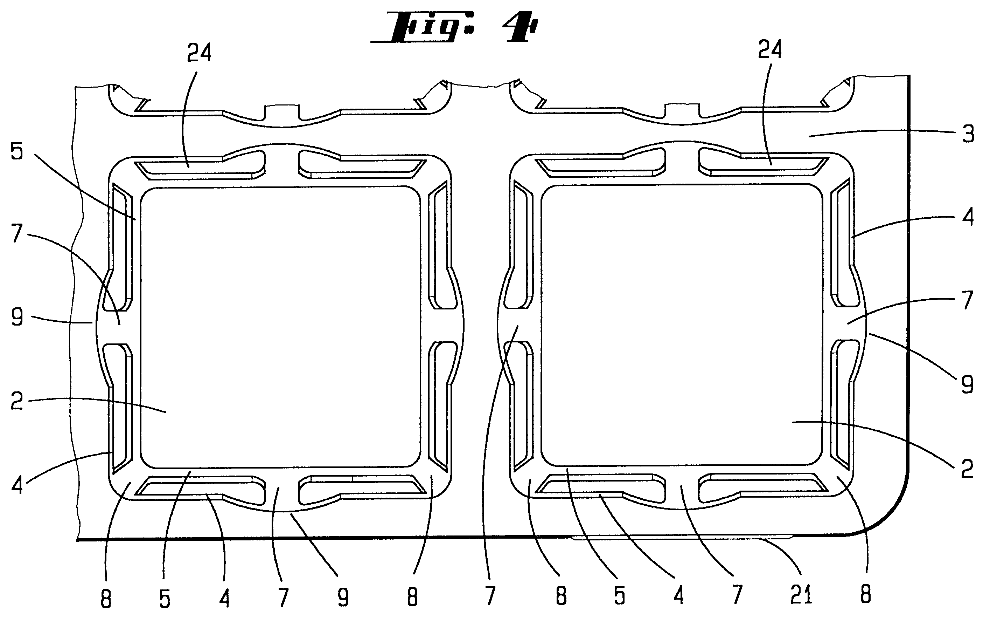

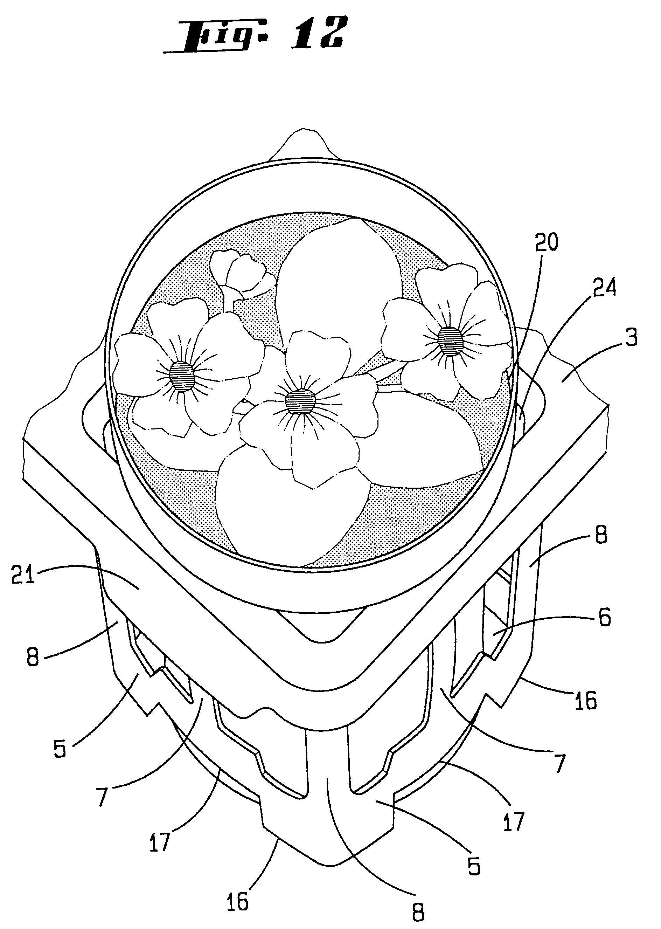

Dargestellt und beschrieben ist (mit Bezug zunächst insbesondere zu den Figuren 1 und 4) ein Traggestell 1 mit Einstellöffnungen 2, die rechteckig bzw. beim Ausführungsbeispiel etwa quadratisch ausgebildet sind. Die Einstellöffnungen 2 dienen insbesondere zur Aufnahme von Pflanztöpfen 20 (vergleiche beispielsweise Fig. 12). Zwischen den Einstellöffnungen 2 und diese umrandend erstrecken sich Stege 3. Die Stege 3 bestehen aus einem nach unten offenen U-Profil.

Ein Fassungsrand 4 einer Einstellöffnung 2 ist durch einen U-Schenkel des U-Profils gebildet.

Das U-Profil ist nach unten offen. Der Rücken des U-Profils bildet den wesentlichen Teil der in der Draufsicht beispielsweise gemäß Figur 1 erscheinenden Stege 3.

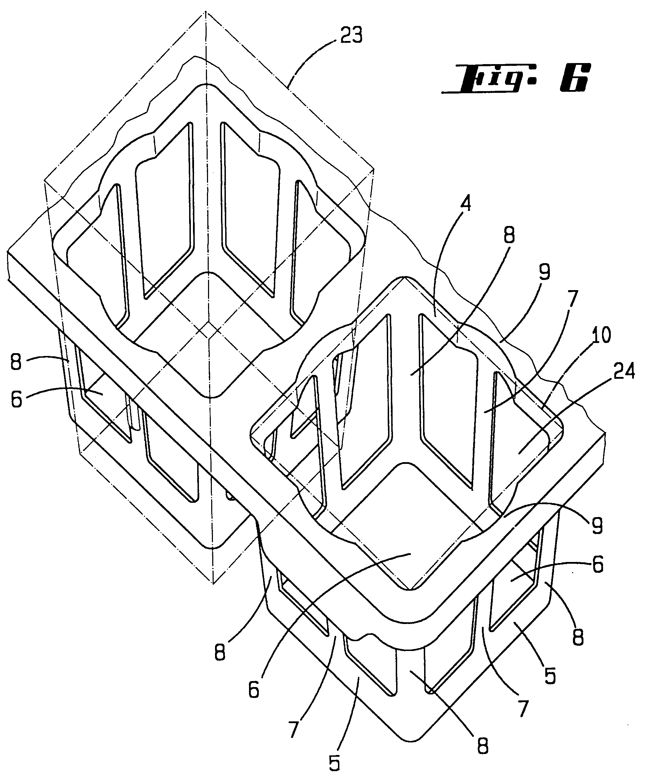

In Öffnungsrichtung des U-Profils, also unterhalb der Rücken der Stege 3 und beabstandet hierzu sind Umlaufgurte 5 vorgesehen, die einer Einstellöffnung 2 jeweils zugeordnet sind. Die Umlaufgurte 5 begrenzen gleichfalls eine etwa quadratische, gegenüber der Einstellöffnung 2 jedoch kleinere Öffnung 6 (vergleiche beispielsweise Fig. 6). Die Einstellöffnung 2, wie auch die durch die Umlaufgurte begrenzte Öffnung 6, weicht von einer quadratischen Form übereinstimmend in den Ecken ab. Die Ecken sind gerundet. Hiermit ist zugleich ein hoher Stabilitätsgewinn erzielt.

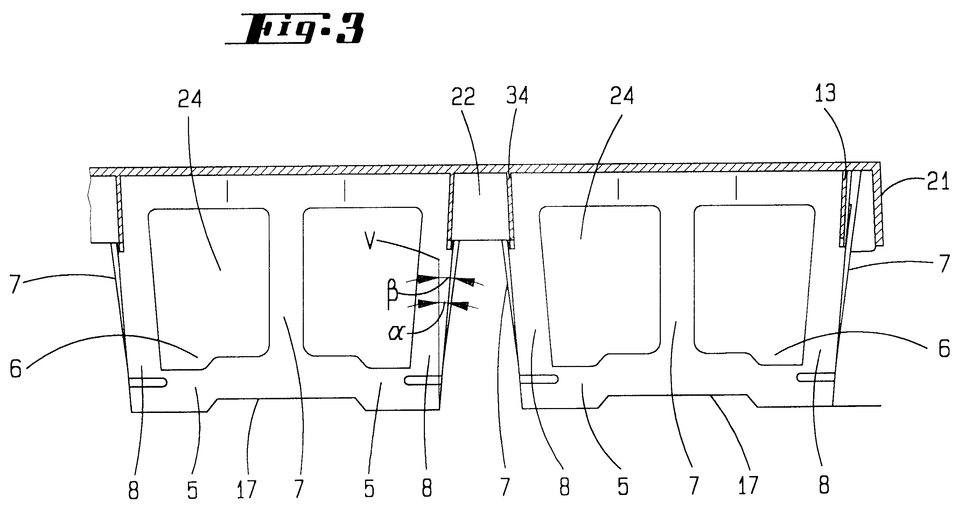

Der Umlaufgurt 5 ist mit dem U-Profil über Verbindungsstege 7, 8 verbunden. Die Verbindungsstege 7, 8 gehen von dem Fassungsrand 4 einer Einstellöffnung aus. Hierbei schließen die Eckverbindungsstege 8 und die Seiten-Verbindungsstege 7 mit einer Vertikalen V unterschiedliche Winkel Alpha, Beta ein (vergleiche beispielsweise Fig. 3). Dieses ist dadurch gegeben, daß die Anbindung der Verbindungsstege 7 durch gegenüber einem regelmäßigen, durch die Eckbereiche der Einstellöffnung 2 aufgespannten Rechteck 10 (Fig. 6) abweichend ist. Die genauen Winkelmaße ergeben sich aus dem Unterschied der Einstellöffnung 2 zu der bodenseitigen Öffnung 6 und dem Maß der Zurückweichung der Anbindung der Verbindungsstege 7 an den Stegen 3.

Der Fassungsrand 4 weist gegenüber dem an den Eckbereichen orientiert aufgespannten Rechteck 10 in der Einstellöffnung 2 ausladende Bereiche 9 auf, welche jeweils etwa seitenmittig zu dem Rechteck 10 ausgebildet sind und von welchem jeweils die Seiten-Verbindungsstege 7 ausgehen.

Im einzelnen sind die ausladenden Bereiche 9 kreisabschnittsförmig ausgebildet. Dies ist etwa anhand von Fig. 1 zu verdeutlichen. Eine Tiefe t eines Bereiches 9 in Breitenrichtung des Steges 3 entspricht etwa einem Viertel einer Stegbreite b. Die Stegbreite kann beispielsweise 12 mm betragen. Entsprechend ist das Maß für t etwa 3 mm. Aufgrund der gegenüberliegend angeordneten Bereiche 9 ergibt sich also eine Schwächung des Steges 3 auf etwa die Hälfte seiner gewöhnlichen Breite.

Die Verbindungsstege 7 bzw. 8 sind streifenförmig ausgebildet, mit einer dem Inneren der Einstellöffnung 2 bzw. der unteren Öffnung 6 zugeordneten Breitseite. Gleiches gilt für den Umlaufgurt 5.

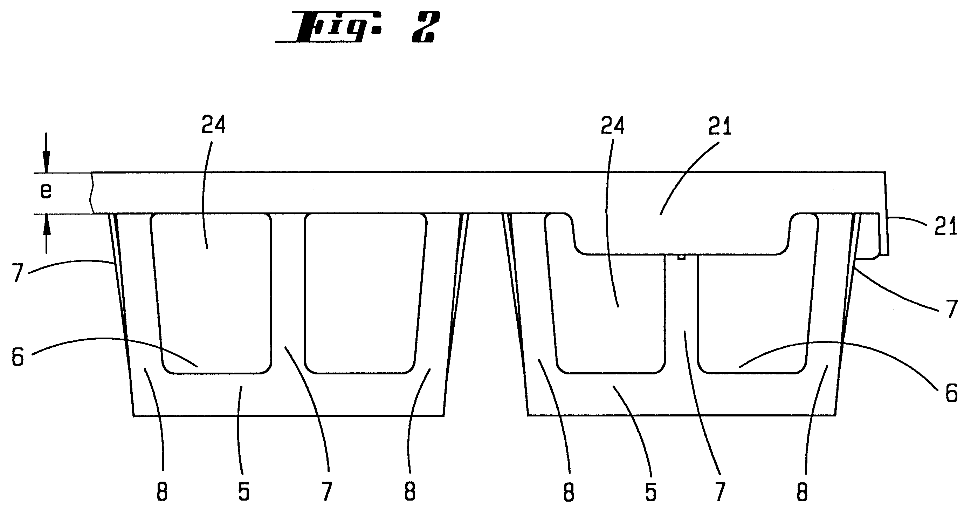

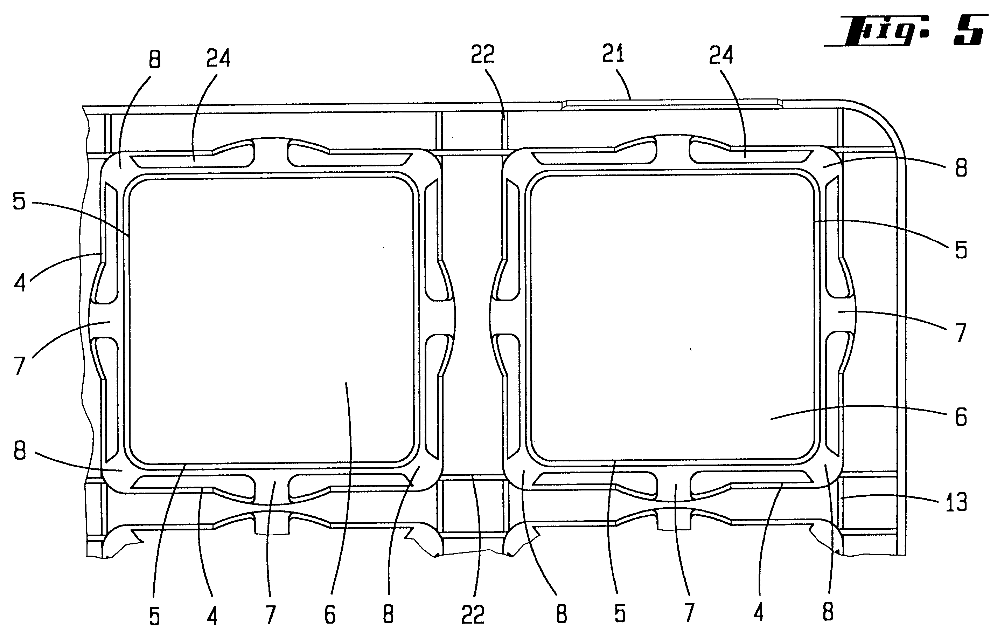

Mit Bezug zu Fig. 2 ist zu erkennen, daß ein Außenrand 21 des Traggestells 1 vergrößert ausgebildet ist, d.h. ein U-Schenkel des nach unten offenen U-Profils am Außenrand etwa (abschnittsweise) eine doppelte Länge aufweisen kann gegenüber der Länge der U-Schenkel im Inneren des Traggestells 1. Die gewöhnliche Länge eines U-Schenkels (Maß e) beträgt etwa 1 cm. Bei der Ausführungsform nach Fig. 3 sind auch mittlere Versteifungsrippen 22 mit dieser doppelten Länge ausgebildet. Es handelt sich hierbei um diejenigen Versteifungsrippen, die ein Rechteck bzw. Quadrat zwischen vier Eck-Verbindungsstegen 8 ausbilden (vergleiche beispielsweise Fig. 5).

Mit Bezug zu insbesondere den Figuren 2, 3 und 6 ist zu erkennen, daß die Verbindungsstege 7, 8 Seitenflächen 24 begrenzen, die Fenster darstellen. Dies ergibt den Körbchencharakter der Stege 7, 8 und des Umlaufgurtes 5 (jedoch ohne Boden).

Ein Diagonalmaß r einer Einstellöffnung 2 entspricht etwa dem Zehn- bis Fünfzehnfachen der Stegbreite, bevorzugt etwa dem Dreizehnfachen.

Die Einstellöffnung 2, die Verbindungsstege 7, 8 und der Umlaufgurt 5 sind insgesamt im wesentlichen so gestaltet, daß durch die Innenflächen (bei Idealisierung der Eckbereiche) ein Konus 23 mit quadratischer Querschnittsfläche erzeugt ist.

In Fig. 3 ist eine gegenüber der Darstellung in Fig. 2 abweichende Ausbildung des unteren Umlaufgurtes 5 dargestellt. Dies ist weiter unten noch im einzelnen erläutert.

Die Verbindungsstege 7, 8 gehen auch einstückig in den gleichfalls streifenförmig ausgebildeten Umlaufgurt 5 über.

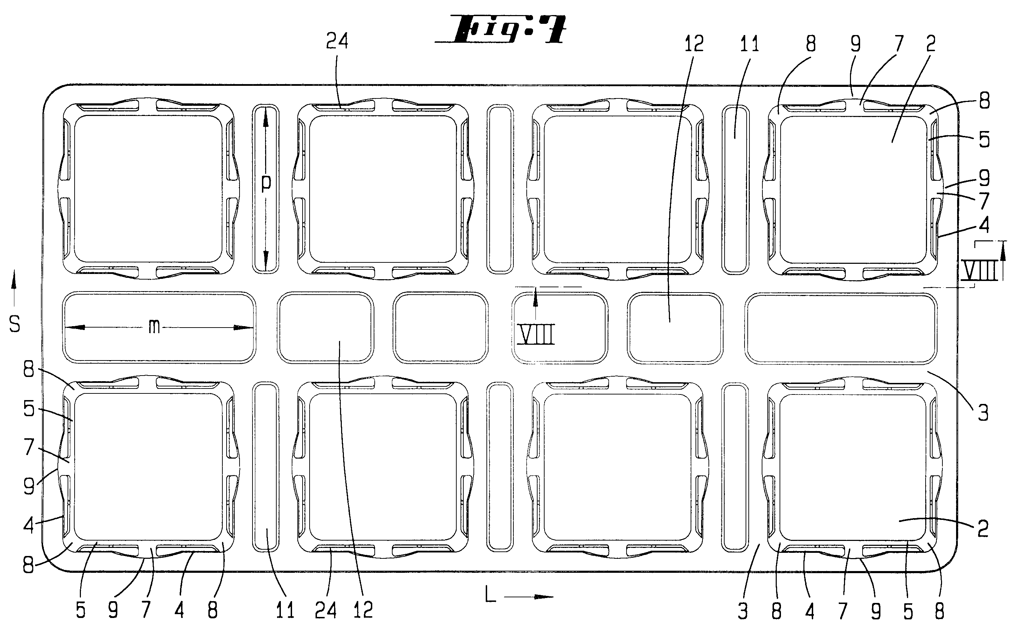

Bei der Ausführungsform nach Fig. 7 sind zwischen den Einstellöffnungen 2 noch Zwischenöffnungen 11, 12 vorgesehen. Auch diese sind durch einen umlaufenden Flansch des U-Profils begrenzt. Insgesamt ergibt sich hierdurch eine aufgelockerte, weiter distanzierte Anordnung der Einstellöffnungen 2, bei gleichwohl weiterhin hoher Stabilität des Traggestells 1 im ganzen. Die Anordnung ist weiter so getroffen, daß ein eine Einstellöffnung 2 begrenzender Steg 3 entweder Teil eines Außenrandes des Traggestells 1 ist oder Teil einer Umrandung einer Zwischenöffnung 11, 12 zwischen zwei Einstellöffnungen 2. Eine Zwischenöffnung 11 weist eine Länge p auf, die einer Seitenlänge einer Einstellöffnung 2 etwa entspricht. Beide Zwischenöffnungen 11, 12 sind im wesentlichen rechtwinklig ausgebildet, mit einer Schmalseite und einer Langseite. Bei rechteckiger Ausbildung des Traggestells 1 insgesamt sind sich in Richtung einer Schmalseite S gegenüberliegende Einstellöffnungen 2 durch eine Zwischenöffnung 12 beabstandet, deren schmalseitige (bezogen auf die Schmalseite der Zwischenöffnung 12 selbst) Öffnungsbreite etwa dem Drei- bis Sechsfachen, vorzugsweise dem Vierfachen einer Stegbreite entspricht. Die Zwischenöffnungen 12 größerer Öffnungsbreite sind in Längsrichtung L des Traggestells 1 in Abfolge hintereinander ausgebildet. Durch die beschriebene Anordnung, daß eine solche Zwischenöffnung 12 zwischen zwei sich in Richtung der Schmalseite S gegenüberliegenden Einstellöffnungen 2 des Traggestells 1 angeordnet ist, sind die Einstellöffnungen 12 so mitten-spiegelsymmetrisch zur Längsrichtung L des Traggestells 1 ausgebildet.

Eine Länge m einer Zwischenöffnung 12 größerer Breite entspricht etwa einer Seitenlänge oder der Hälfte einer Seitenlänge einer Einstellöffnung 2. Hierbei ist die Abfolge so getroffen, daß ein Schmalseitensteg zwischen zwei Zwischenöffnungen 12 größerer Breite entweder mittig auf eine Schmalseite einer Zwischenöffnung 11 trifft oder mittig auf einen Rand einer Einstellöffnung. Ein solcher Quersteg leistet gerade da eine Unterstützung, wo eine Schwächung aufgrund eines Bereiches 9 gegeben ist.

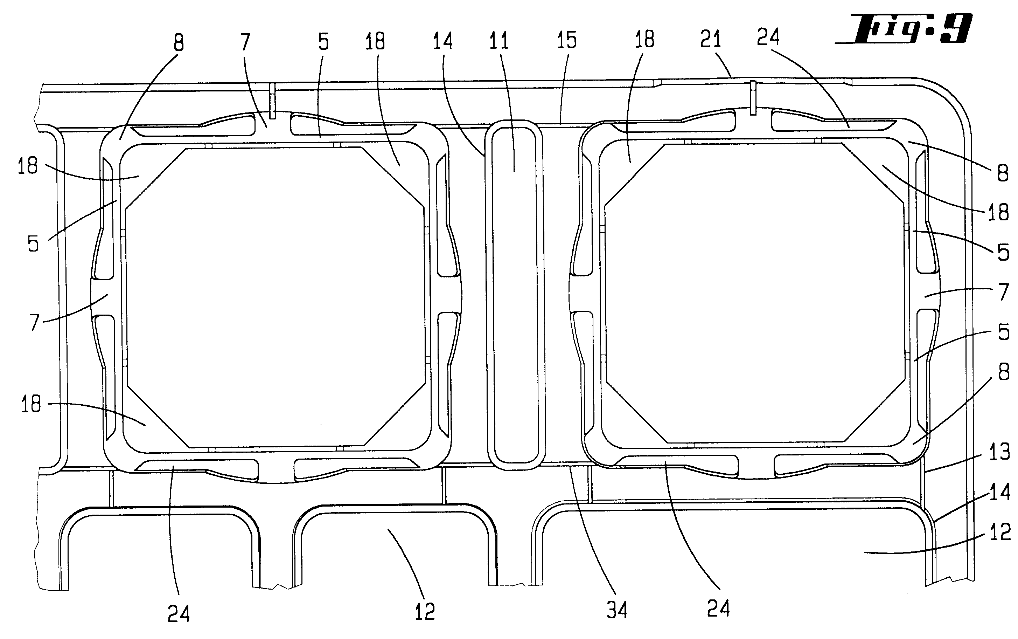

Den Abmessungen der Zwischenöffnungen kommt aber noch eine besondere Bedeutung zu im Hinblick auf den damit geschaffenen Diagonalabstand zweier Eckbereiche des Umlaufgurtes unterschiedlicher Tragkörbchen. Dies ist zunächst beispielsweise anhand Fig. 7 verdeutlicht. Ein Diagonalabstand u zwischen den (in bezug auf Fig.7 gesehenen) unteren Eckbereichen eines Einstellkörbchens bzw. eines Umlaufgurtes 5 zweier diagonal benachbarter Öffnungen 2 entspricht einer Seitenlänge einer quadratischen Einstellöffnung 2, d.h. dem Maß, welches wiederum dem Maß p bevorzugt entspricht. Hierdurch lassen sich bei umgedrehter Benutzung des Traggestells (also eine Benutzung entsprechend der Darstellung gemäß Fig. 9) auch zwischen den vier diagonal gegenüberliegenden Eckbereichen jeweils benachbarter Körbchen ein Blumentopf haltern, bevorzugt ein runder Blumentopf. Der kreuzförmige durchgehende Abstand schafft darüber hinaus noch weitere Möglichkeiten.

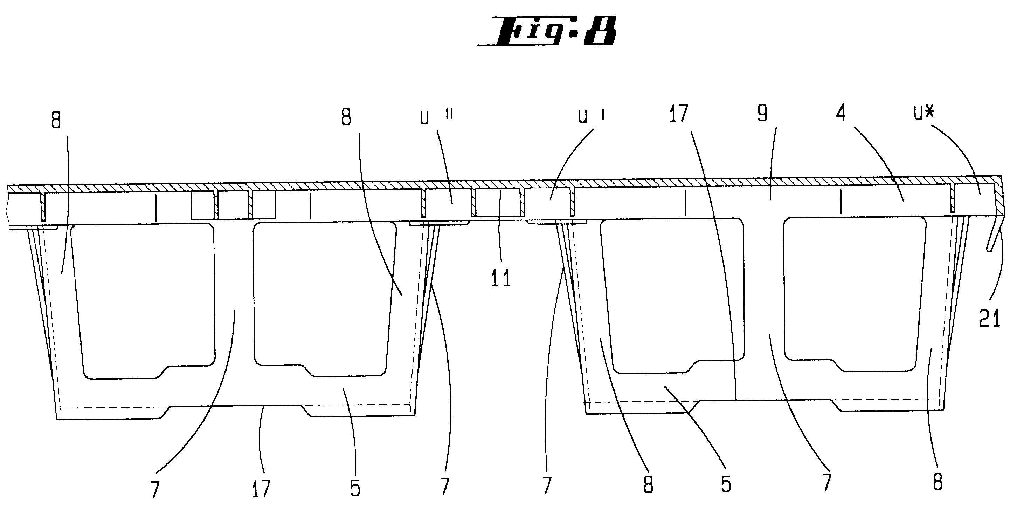

Fig. 8 gibt eine Schnittdarstellung, geschnitten entlang der Linie VIII-VIII in Fig. 7 wieder. Es ist ein erstes randseitiges U-Profil u zu erkennen, welches den Außenrand bildet, ein U-Schenkel, der den Fassungsrand 4 bildet und zwei U-Profile u' und u'', die jeweils einerseits eine Einstellöffnung 2 und andererseits eine Zwischenöffnung 11 begrenzen.

In Fig. 9 ist eine Unteransicht ausschnittsweise des Traggestells gemäß Fig. 7 zu erkennen. Es sind Versteifungsrippen 13, 15, 34 dargestellt, die jeweils ausgehend von einer Zwischenöffnung 11 bzw. einem die Zwischenöffnung 11 umgrenzenden Schenkel 14 des U-Profils an einem Verbindungssteg, nämlich den Eckverbindungssteg 8 der benachbarten Einstellöffnung angebunden sind. Durch die Versteifungsrippen 15 und 34 ist die Versteifung über die Zwischenöffnung 11 hinaus erreicht, indem die Versteifungsrippen 15, 34 dort in den schmalen Randbereichen in den Schenkel 14 des U-Profil einlaufen und wieder auslaufen, ansonsten in gleicher Weise mit den Verbindungsstegen 8 verbunden sind, wie dies zuvor erläutert worden ist.

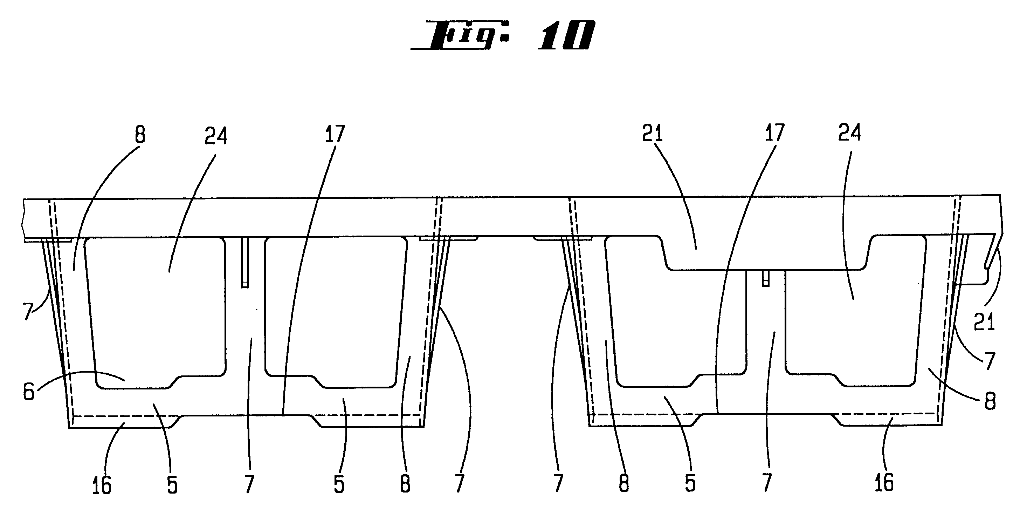

Aus der Darstellung gemäß Fig. 10, die eine Seitenansicht ist, ist ersichtlich, daß an den unteren umlaufenden Gurt 5 in Fortführung der Geometrie (in senkrechter Richtung) Vorsprünge 16 angeformt sind, die den Eckbereichen des Umlaufgurtes 5 zugeordnet sind. Die Vorsprünge 16 springen bezüglich einer im mittleren Seitenbereich zurückgenommenen Unterkante 17 des Umlaufgurtes 5 vor.

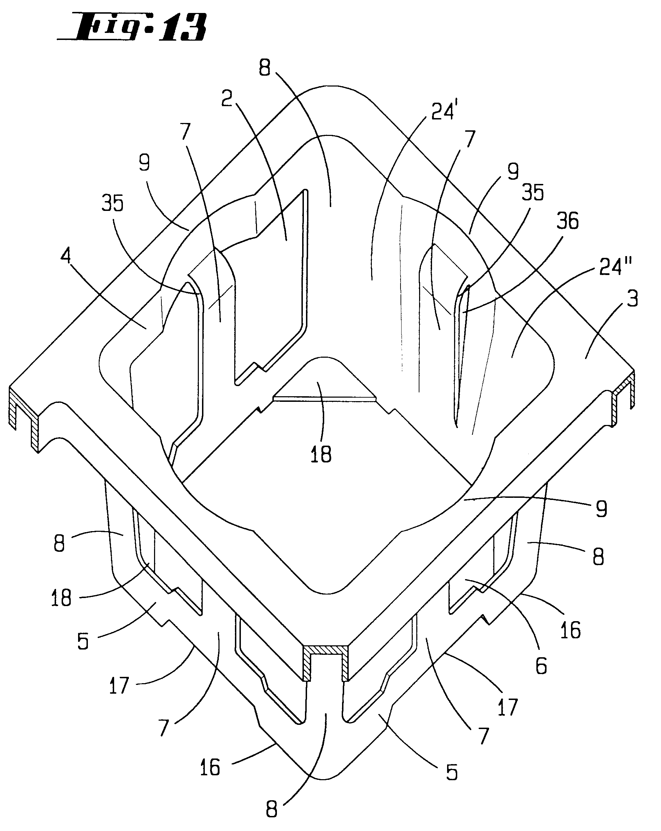

Bei allen dargestellten Ausführungsformen, insbesondere aber auch bei der Ausführungsform der Figuren 7 bis 11 können auch Blumentöpfe von der unteren Öffnung 6 aus in einen Einstellkorb eingestellt werden. Hierbei sind insbesondere auch die Vorsprünge 16 vorteilhaft. Darüber hinaus können, wie dies beispielsweise in Fig. 9 und Fig. 13 angedeutet ist, Eckbereiche des umlaufenden Gurtes 5 durch angeformte Flächen 18 teilweise geschlossen sein. Dies ist vorteilhaft, wenn derartige Traggestelle 1 beispielsweise auf einer Röllchenbahn transportiert werden.

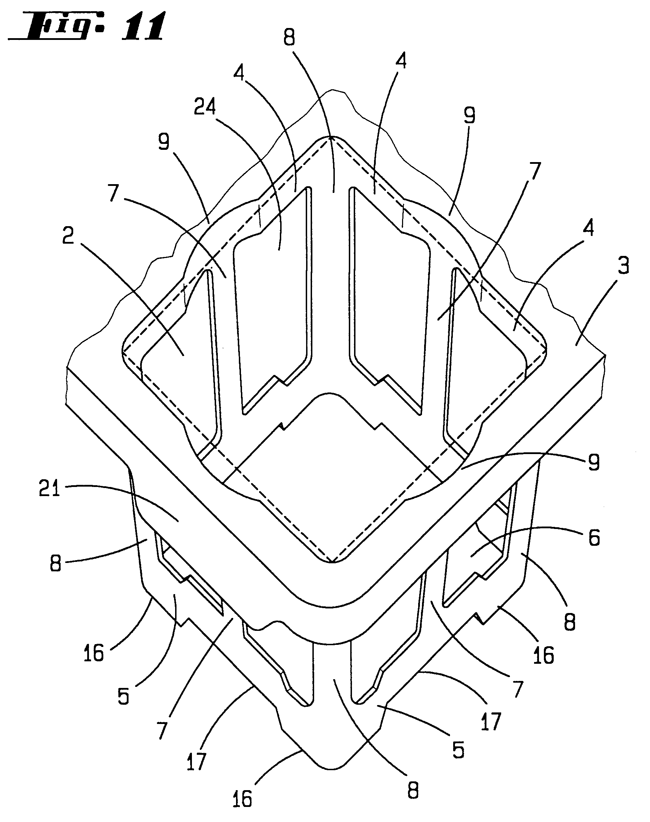

In Fig. 11 ist die Ausgestaltung eines Körbchens gemäß der Ausführungsform nach den Figuren 7 bis 10 perspektivisch dargestellt. Es ist insbesondere auch zu erkennen, daß die Vorsprünge 16 und die zurückgenommene Unterkante 17 so ausgebildet sind, daß die Breite des Gurtes 5 hierbei im wesentlichen immer gleich bleibt.

In Fig. 12 ist ein in eine solche Einstellöffnung bzw. ein solches Tragelement eingestellter Pflanztopf 20 dargestellt. Bei der Ausführungsform nach Fig. 13 ist über die bereits zuvor erläuterten Elemente im Bodenbereich hinaus von Bedeutung, daß die Seitenverbindungsstege 7 über eine kreisbogenförmige Krümmung 35 an den Fassungsrand 4 angebunden sind, so daß bei dieser Ausführungsform im Anschluß an die Krümmung 35 praktisch keine unterschiedlichen Winkel der Verbindungsstege 7, 8 mit der Vertikalen V mehr gegeben sind.

Bei der Ausführungsform gemäß Fig. 13 ist zu erkennen, daß die Seitenflächen 24' und 24'' im wesentlichen geschlossen ausgebildet sind, mit Ausnahme eines Spaltes 36 zwischen dem Verbindungssteg 7 und den Seitenflächen 24' und 24''. Die Seitenflächen 24' und 24'' sind einem Außenrand des Traggestells 1 zugeordnet. Sie können etwa zur Befestigung von Auszeichnungsschildern oder Etiketten dienen.

Das Traggestell 1 kann insbesondere als einstückiges Kunststoffspritzteil hergestellt sein. Beispielsweise aus Polyethylen.

Eine besondere Ausgestaltung bezüglich der möglichen Anbringung von Etiketten ist im folgenden beschrieben.

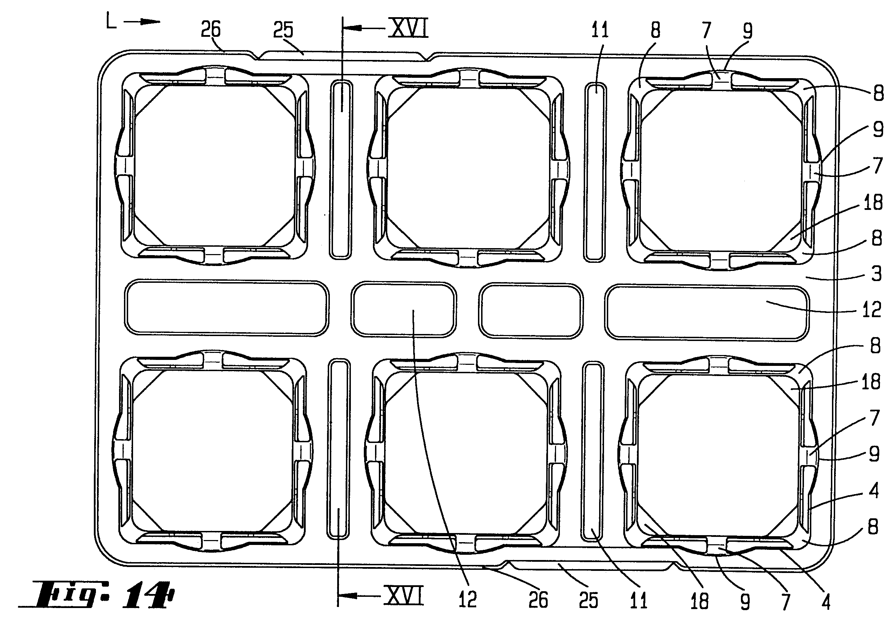

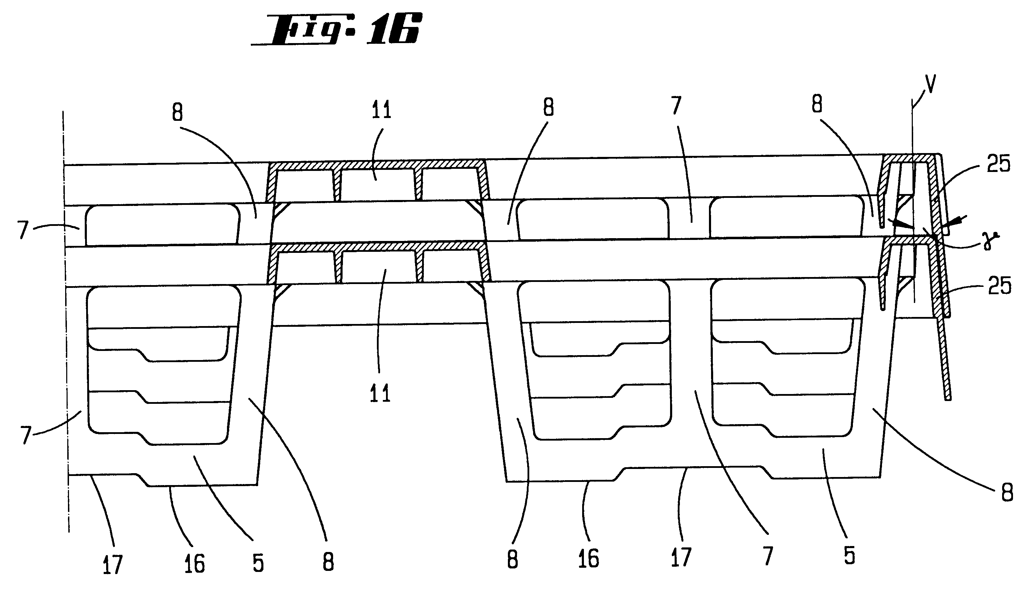

Bei der Ausführungsform nach Fig. 14 sind zwei Etikettabschnitte 25 ausgebildet. Ein Etikettabschnitt 25 ist in seinem oberen, einer Einstellöffnung 2 zugeordneten Bereich zurückversetzt gegenüber dem Außenrand 26 ausgebildet. Wie sich insbesondere auch aus Fig. 16 ergibt, ist dies durch einen Rücksprung des entsprechenden U-Schenkels des U-Profils in diesem Abschnitt erreicht. Der Rücksprung entspricht etwa der Dicke eines U-Schenkels. Die Länge des Etikettabschnittes 25 in Richtung L des Traggestells entspricht etwa einer Seitenlänge des Quadrats einer Einstellöffnung 2.

In Öffnungsrichtung des U-Profils überragt der Etikettabschnitt den Außenrand, wie sich aus Fig. 16 ergibt, beispielsweise und bevorzugt um das Dreifache. Auch ist darüber hinaus bevorzugt ein Neigungswinkel Gamma zu einer Vertikalen V im Bereich des Etikettabschnittes 25 unterschiedlich gewählt, nämlich kleiner, d.h. ein spitzerer Winkel, als im Bereich des sonstigen Außenrandes. Hierdurch ist es möglich, die vertikale Länge des Etikettabschnittes 25, wie beschrieben, wesentlich größer als diejenige des sonstigen Außenrandes vorzusehen, ohne daß in einer Draufsicht die Randabmessungen des Traggestells im Bereich des Etikettabschnittes 25 verlassen werden. Auch sind weiter bevorzugt, wie sich aus insbesondere Fig. 14 ergibt, an dem Traggestell 2 Etikettabschnitte 25 vorgesehen, an gegenüberliegenden Außenrändern, jedoch spiegelbildlich bezüglich eines Mittelpunktes des Traggestells versetzt.

Im Unterschied zu Fig. 14 ist jedoch weiter bevorzugt, daß die Etikettabschnitte 25 nur schmalseitig an dem Traggestell ausgebildet sind. Auch hier jedoch außermittig bezüglich einer Schmalseite und darüber hinaus spiegelsymmetrisch bezüglich eines Mittelpunktes des Traggestells.

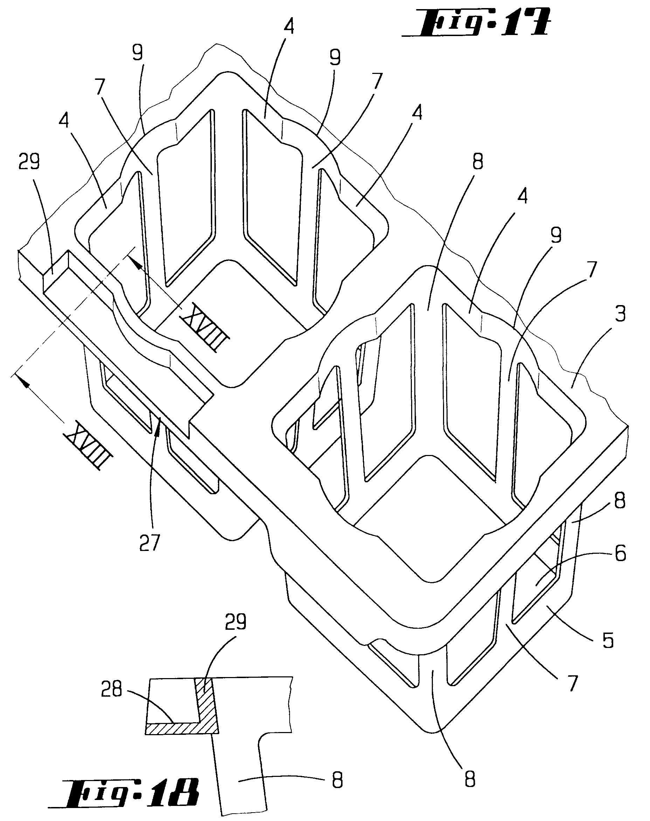

Bei dem Ausführungsbeispiel nach Fig. 17 ist zu erkennen, daß der Außenrand 26 abschnittsweise mit einer Stufe 27 ausgebildet ist. Diese Stufe 27 ist unter Verlassung des U-Profils als etwa senkrecht an den einen Fassungsrand 4 bildenden Schenkel des U-Profils angeformten Tragsteg 28 gebildet. Der Tragsteg 28 geht endseitig über Stirnwände 29 in den Stegrücken über. Im Bereich der Stufe 27 ist entsprechend das U-Profil durch ein T-Profil ersetzt (wobei der Fassungsrand 4 den oberen Quersteg des T-Profils bildet). Im einzelnen ist dies auch aus Fig. 18 ersichtlich.

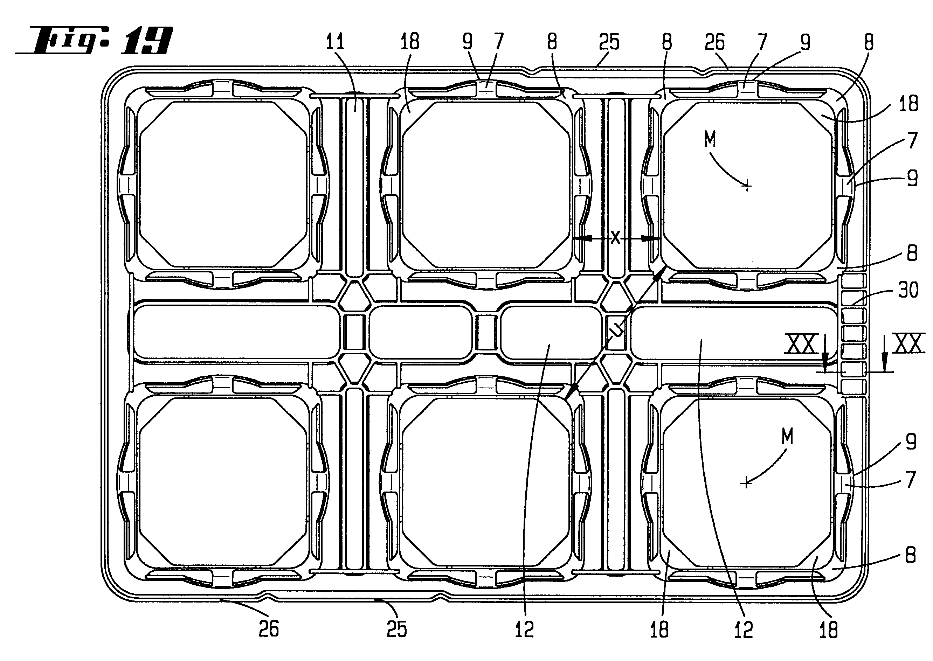

Die bereits weiter oben beschriebene maßliche Abstimmung der Öffnungen 6 benachbarter Körbchen zueinander ist nochmals in bezug auf die Unteransicht gemäß Fig. 19 erläutert. Unabhängig davon, ob Zwischenöffnungen 11, 12 vorgesehen sind, sind die unteren Eckbereiche (die bei umgedrehter Anordnung des Traggestells gemäß Fig. 19 sich oberseitig befinden) von Eckstegen 8 derart distanziert, daß das Diagonalmaß u etwa einer Seitenlänge einer quadratischen Einstellöffnung 2 entspricht. Man kann dies auch dahingehend beschreiben, daß eine Distanzierung von Mittelpunkten M verschiedener Einstellöffnungen 2 bzw. von Öffnungen 6 zueinander so gewählt sind, daß das Diagonalmaß u zweier benachbarter, diagonal einander zugeordneter Tragkörbchen etwa der Seitenlänge einer Einstellöffnung 2 entspricht. Hierbei ist weiter bevorzugt, das Diagonalmaß u unterschiedlich von einem Maß x des Abstandes zweier Eckbereiche sich über eine Seitenlänge gegenüberliegend angeordneter Öffnungen 6 zu wählen. Das Maß x ist weiter bevorzugt kleiner als das Maß u, etwa im Bereich der Hälfte des Maßes u.

Bezüglich sich in Richtung einer Schmalseite gegenüberliegender Körbchen liegt das dem Maß x entsprechende Maß um etwa 30 % höher. Diese Maßverhältnisse sind auch von Bedeutung für eine Erfaßbarkeit der Traggestelle mittels Gabeln von Stapelgeräten bzw. Gabelstaplern. Wesentlich ist auch, daß sich die hierdurch definierten Freiräume jeweils bis etwa an die Wurzeln der Stege, unter Berücksichtigung der Flanschlängen des U-Profils und des geneigten Verlaufs der Stege fortsetzen.

Bei einer bevorzugten Ausführungsform beträgt das Maß einer Seitenlänge einer Einstellöffnung 2 beispielsweise 9,5 cm, entsprechend auch das Diagonalmaß einer gleichen Länge, hier jedoch bevorzugt genau ca. 9 cm und das Quermaß x etwa 4,5 cm.

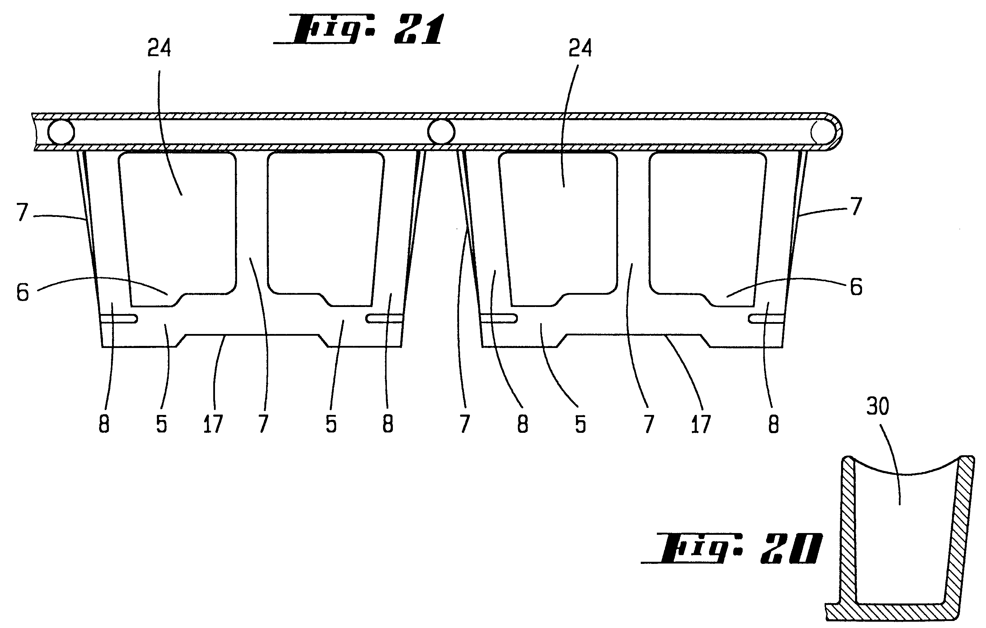

Weiterhin ist in Fig. 19 zu erkennen, daß bei der Randausbildung, mittig, quer zuer Erstreckung des U-Profils Rippen 30 ausgeformt sind. Aus der Darstellung gemäß Fig. 20 läßt sich auch erkennen, daß diese öffnungsseitig des U-Profils konkav ausgebildet sind, um eine Griffrinne zu bilden. Die Rippen 30 sind eng nebeneinander angeordnet, beispielsweise bei einer Dicke einer Rippe 30 von 1 oder 2 mm, mit einem Abstand von 2 bis 4 mm zueinander.

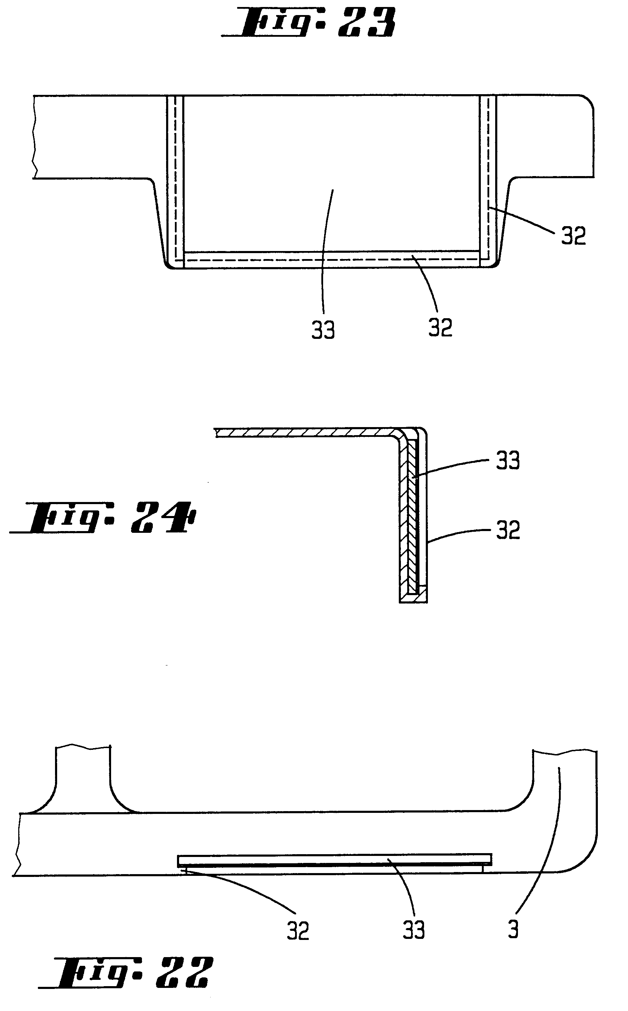

In Fig. 21 ist eine weitere Alternative einer bevorzugten Ausführungsform der Stege insgesamt dargestellt. Hierbei sind die Stege, aus welchen die Verbindungsstege zur Bildung der Körbchen herauswachsen bzw. an welche diese angebunden sind, als rohrförmige Hohlprofile ausgebildet. Grundsätzlich kann diese Ausbildung nur im Randbereich vorgesehen sein, weiter bevorzugt ist diese Ausbildung jedoch durchgängig vorgesehen. Hiermit sind erhebliche Vorteile verbunden. Neben einer weiteren Erhöhung der Stabilität fallen Rinnen, in die sich Verschmutzungen einsetzen können, also beim Anwendungsfall insbesondere Blumenerde, weg. Auch ist ohne weiteres eine gute Angreifbarkeit gegeben, ohne daß es hierzu noch besonderer Ausgestaltungen bedürfte. Dieses Stegprofil wird im Gasinnendruckverfahren hergestellt.

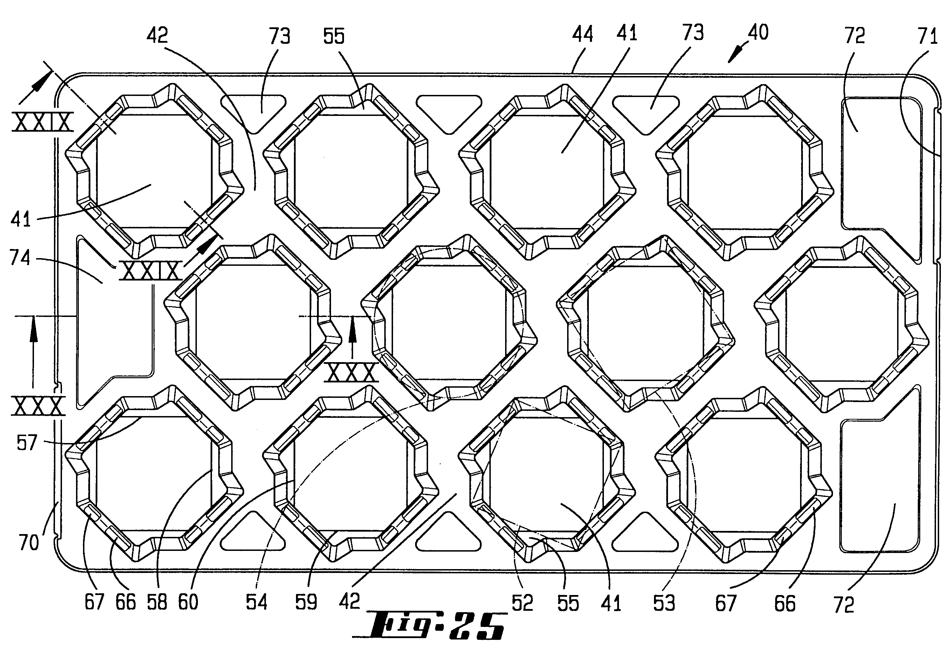

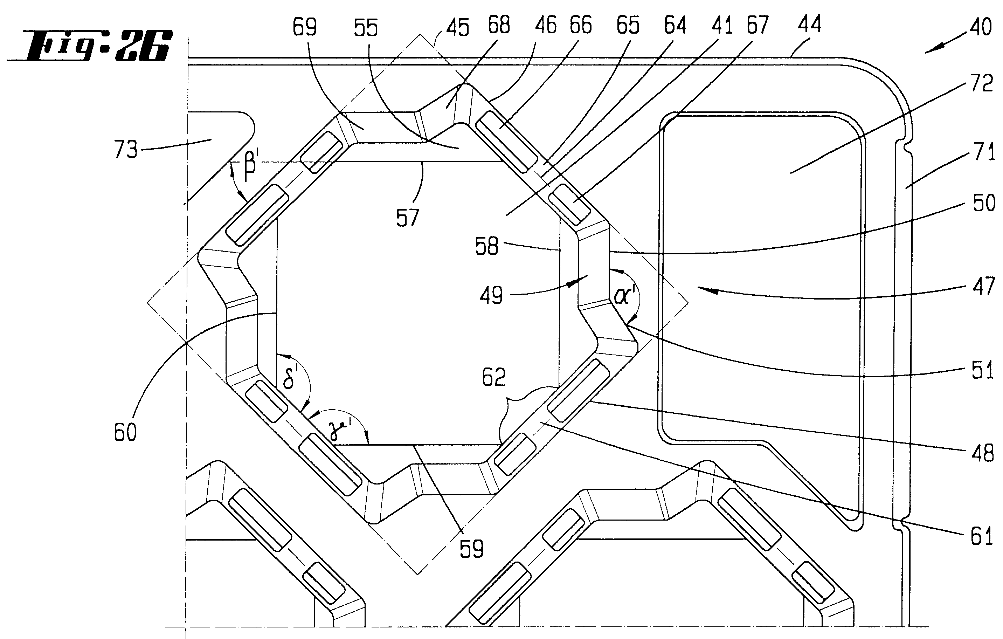

In den Fig. 22 bis 24 ist eine weitere bevorzugte Detailausgestaltung des Etikettabschnittes 25 dargestellt. Bei dieser Ausführungsform sind randseitig und unterseitig T-Nuten 32 vorgesehen, in welche ein Preisschild 33 einschiebbar ist. Auch bei dieser Ausgestaltung ist jedoch bevorzugt die Bemessung so gehalten, daß sich keine Überschreitung der übrigen Gesamtabmessungen des Traggestells ergibt, in einer Draufsicht also der Etikettabschnitt 25 nicht über eine Außenrandlinie der Schmalseite des Traggestells hinausragt.

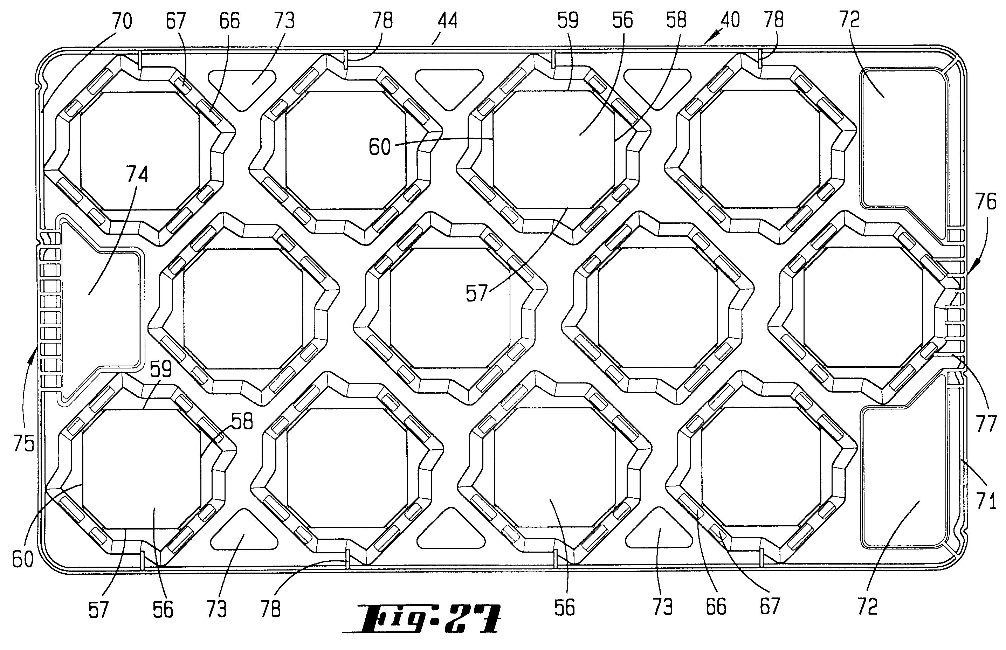

Dargestellt und beschrieben ist auch, insbesondere mit Bezug zu den Figuren 25 bis 30, ein Traggestell 40, das eine Vielzahl von Einstellöffnungen 41, beim dargestellten Ausführungsbeispiel zwölf Einstellöffnungen 41 aufweist. Die Einstellöffnungen 41 dienen insbesondere zur Aufnahme von Blumentöpfen. Sie verjüngen sich zum Boden hin konisch.

Im übrigen wird zur allgemeinen Beschreibung des Traggestells 40 und zur Beschreibung von Elementen, die auch beim Traggestell der Figuren 25 bis 30 verwirklicht sind, jedoch nicht im einzelnen weiter beschrieben sind, auf die vorstehende Beschreibung verwiesen.

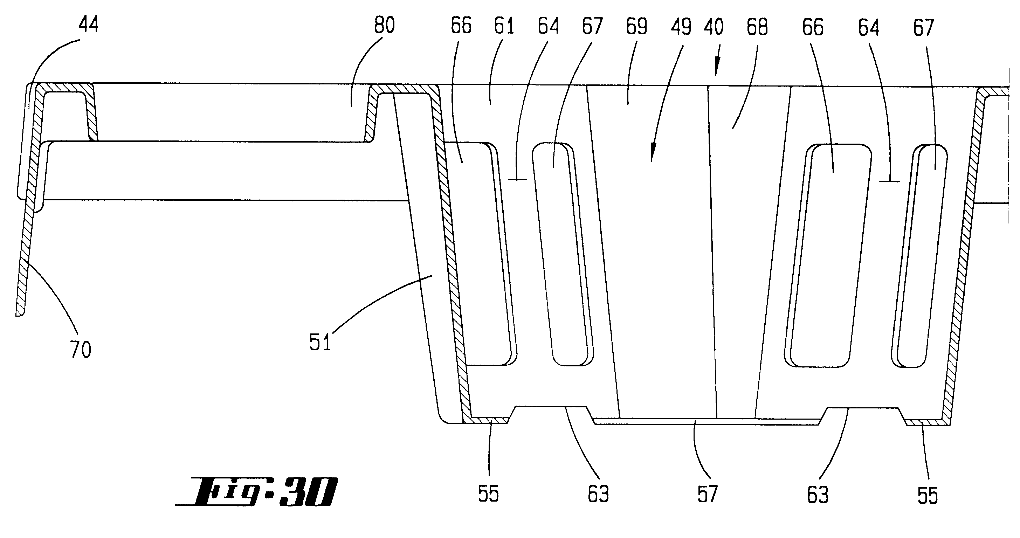

Die Einstellöffnungen 41 sind durch sich zwischen den Einstellöffnungen 41 erstreckende Stegen 42 getrennt. Die Stege umfassen die Einstellöffnungen 41 und bilden, wie dies insbesondere aus den Schnittdarstellungen gemäß Fig. 29 und 30 ersichtlich ist, ein einseitig offenes, nämlich nach unten offenes, U-Profil. Ein Fassungsrand 43 einer Einstellöffnung 41 wird durch einen U-Schenkel des U-Profils gebildet. Das U-Profil ist entweder durch den Fassungsrand einer benachbarten Einstellöffnung oder durch einen Außenrand 44 des Traggestells 40 geschlossen. Gegebenenfalls kann auch das U-Profil durch einen Rand einer sonstigen, nicht als Einstellöffnung dienenden Öffnung des Traggestells 40 geschlossen sein.

Mit Bezug zu Fig. 26 ist besonders deutlich ersichtlich, daß eine Einstellöffnung 41 geometrisch ausgehend von einem Rechteck, hier einem Quadrat 45 gebildet ist. Das Quadrat 45 wird durch nur teilweise reale Kanten ausbildende Begrenzungslinien 46, 48 der Einstellöffnung 41 gestaltet. In den Eckbereichen 47 ist eine Eckausbildung zweier aufeinanderstoßender Begrenzungslinien 46, 48 der rechteckigen Grundfläche 45 einer Einstellöffnung 41 als ein zum Inneren des Grundfläche hinweisender Vorsprung 49 gestaltet.

Der Vorsprung 49 ist beim Ausführungsbeispiel eine Vorsprungecke, die unterschiedlich lange Seiten 50, 51 aufweist. Die Seiten 50, 51 des Vorsprungs 49 stoßen in einem stumpfen Winkel Alpha' aufeinander (wobei die Bereiche, in welchen die Seiten aufeinanderstoßen in sich im einzelnen gerundet ausgebildet sind).

Beim Ausführungsbeispiel beträgt dieser Winkel Alpha' ca. 140°. Auch sind die Längen der Seiten 50, 51 eines Vorsprungs 49 unterschiedlich und verhalten sich beim Ausführungsbeispiel sowie auch bevorzugt etwa wie 1,5 : 1.

Eine Begrenzungslinie 46 bzw. 48 des regulären Rechtecks 45, soweit sie durch eine reale Kante gebildet ist, beträgt etwa das Drei- bis Fünffache der Länge einer Seite 50 bzw. 51 eines Vorsprungs 49. Speziell beträgt die Länge einer Begrenzungslinie 46 bzw. 48 etwa das Dreifache der größeren Seite 50 eines Vorsprungs 49.

Diese Ausgestaltung einer Einstellöffnung 41 ermöglicht es, Blumentöpfe rechteckigen bzw. quadratischen Querschnitts in sogar unterschiedlichen Größen sicher zu haltern, wie dies beispielsweise in Fig. 25 bezüglich einer Einstellöffnung mit den Linien 52 bzw. 53 angedeutet ist. Darüber hinaus kann aber in einer solchen Einstellöffnung 41 auch ein Blumentopf runden Querschnitts vorteilhaft gehaltert werden, wie dies beispielsweise gleichfalls in Fig. 25 mit der Linie 54 angedeutet ist.

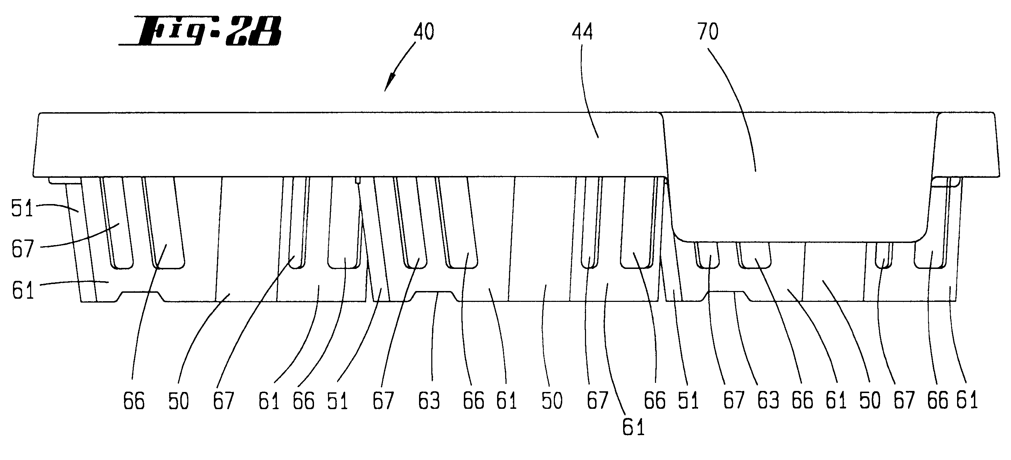

Wie weiterhin den Darstellungen, insbesondere wiederum den Fig. 25, 26 und 27 zu entnehmen ist, ist ein Eckbereich einer Einstellöffnung 41 bodenseitig durch eine angeformte Bodenfläche 55 teilweise geschlossen. Hierdurch ergibt sich bodenseitig eine Öffnung 56 (vergleiche insbesondere Unteransicht gemäß Fig. 27), die gleichfalls im wesentlichen rechteckig bzw. beim Ausführungsbeispiel quadratisch ist, wobei jedoch die zugehörigen Längsseiten 57, 58, 59 und 60 der bodenseitigen Rechtecköffnung 56 zu denen der oberen Öffnung 41 in einen Winkel Beta' von 45° verlaufen. Die Längsseiten 57, 58, 59 und 60 treffen auch nicht unmittelbar in einer Ecke aufeinander, sondern laufen jeweils beidseitig in eine Seitenwand 61 ein, welche oberseitig eine Randkante, beispielsweise die reale Kante einer Begrenzungslinie 48 oder 46 des Rechtecks 45 bildet. In dem Bereich 62 bildet die Seitenwand 61 also die Eckverbindung zwischen zwei Bodenflächen. Hierbei schließt eine Längsseite 59 bzw. 60 mit der Unterkante der Seitenwand 61 jeweils einen stumpfen Winkel Gamma' bzw. Delta' ein, die beim Ausführungsbeispiel einander gleich sind und je etwa 130° betragen.

Aus den Schnittdarstellungen gemäß Fig. 29 und Fig. 30 ist auch ersichtlich, daß die Unterkante 63 der Seitenwand 61 gegenüber der Bodenfläche 55 eine Auswölbung nach oben aufweist. Dies ermöglicht bei befülltem Traggestell 40 eine Luftzufuhr von unten zu den Blumentöpfen und auch ein Ablaufen von Überschußwasser wird beispielsweise begünstigt.

Weiterhin ist durch Sichtkanten 64 angedeutet, daß die Stege 65 zwischen zwei Fensteraussparungen 66, 67 einer Seitenwand im oberen Bereich nach vorne sich zunächst steil vorwölben, und dann flacher nach unten abfallen. Dies ist beispielsweise in Fig. 29 ersichtlich. Insgesamt wird einem solchen Steg 65 damit eine Federwirkung gegeben, die beispielsweise von Bedeutung ist, wenn runde Blumentöpfe aufgenommen werden, die auch dort zur Anlage kommen. Im übrigen ist diese Ausgestaltung aber im einzelnen schon in der weiter oben in bezug genommenen älteren Patentanmeldung ausführlich beschrieben.

Die Seitenflächen 68, 69 eines Vorsprungs 49 sind dagegen fensterlos ausgebildet.

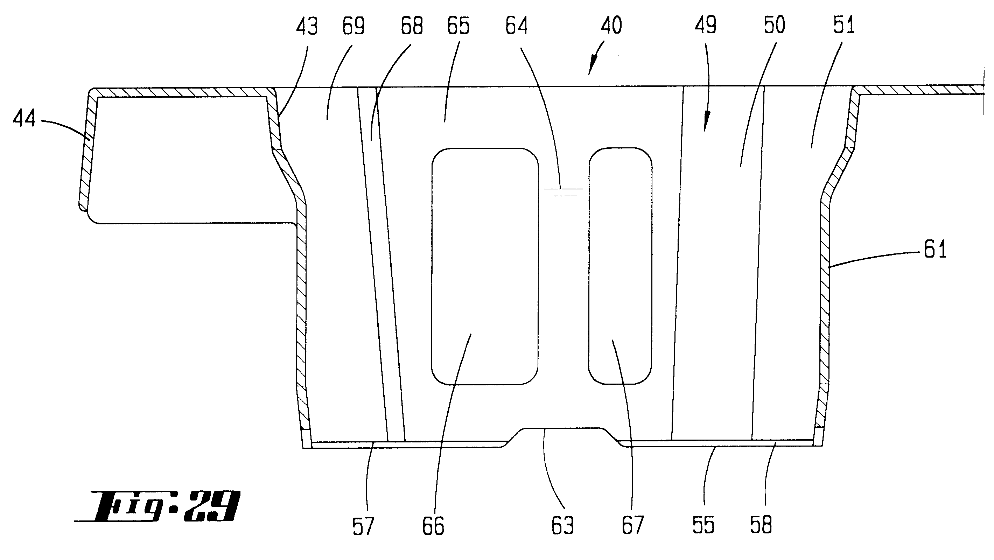

Weiter ist an dem Traggestell 40 auch stirnseitig - spiegelbildlich versetzt - je eine Etikettabschnitt 70 bzw. 71 vorgesehen, die auch in der weiter oben in bezug genommenen Anmeldung bereits beschrieben sind, so daß auch diesbezüglich hierauf Bezug genommen wird. In diesem Zusammenhang ist in Fig. 28 zu erkennen, daß die Etikettabschnitt 70, 71 auch bei vorliegender Ausgestaltung etwa die doppelte Länge aufweisen als es dem Außenrand 44 entspricht.

Zusätzlich zu den Einstellöffnungen 41 sind in dem Traggestell 40 noch weitere Öffnungen 72, 73 vorgesehen, die jedoch primär nicht zur Aufnahme von Gegenständen wie Blumentöpfen oder dergleichen dienen. Aus der Darstellung gemäß Fig. 30 ist aber auch beispielsweise ersichtlich, daß auch diese Öffnungen eine umlaufende Randkante 80 besitzen, welche das U-Profil zu einer benachbarten Einstellöffnung 41 oder zum Außenrand 44 hin schließt.

In der Unteransicht gemäß Fig. 27 ist dargestellt, daß in den Griffbereichen 75, 76 Längsrippen 77 vorgesehen sind, die entweder sich bis zu einer benachbarten Einstellöffnung 41 oder einer sonstigen Öffnung 72 erstrecken. Diese Öffnungen ergeben eine bessere Anfaßbarkeit im Randbereich.

Im übrigen verdeutlicht die Unteransicht gemäß Fig. 27, daß die beschriebene Ausgestaltung der Einstellöffnungen 41 auch für eine sehr hohe Stabilität sorgt, so daß nur verhältnismäßig wenige Verstärkungsrippen 78 vorgesehen sind. Tatsächlich sind nur bei den randseitigen Einstellöffnungen 41 jeweils eine die Einstellöffnung 41 mit dem Außenrand 44 verbindende Verstärkungsrippe 78 vorgesehen, dagegen sind die mittleren Einstellöffnungen 41 ohne jede Verstärkungsrippe zu einer benachtbarten Einstellöffnung 41 ausgebildet.

Abweichend von dem U-Profil kann das Traggestell 40 hinsichtlich der Stege aus einem geschlossenen, vorzugsweise kreisförmig geschlossenen Profil gebildet sein, beispielsweise einem solchen Profil, das sich im Gasinnendruck-Spritzverfahren herstellen läßt. Hierzu wird im einzelnen auch auf die Beschreibung weiter oben verwiesen.

Gegenstand der Erfindung ist auch ein Traggestell, bei welchem die Verbindungsstege 7 oder 8 gegenüber einem regelmäßigen, durch die Eckbereiche der Einstellöffnung 2 aufgespannten gedachten Rechteck 10 mit unterschiedlichen seitlichen Abständen angebunden sind.

Gegenstand der Erfindung, ist auch ein Traggestell, bei dem die Verbindungsstege 7, 8 mit einer Vertikalen V unterschiedliche Winkel Alpha, Beta einschließt.

Gegenstand der Erfindung ist auch ein Traggestell, bei welchem der Fassungsrand 4 der Einstellöffnung 2 gegenüber dem aufgespannten Rechteck 10 seitlich ausladende Bereiche 9 aufweist, derart, daß eine Stegbreite hierdurch vermindert ist, welche Bereiche 9 jeweils etwa seitenmittig zu dem Rechteck ausgebildet sind und von welchem die Verbindungsstäbe 7 ausgehen.

Gegenstand der Erfindung ist auch ein Traggestell, bei dem die Verbindungsstege 7, 8 streifenförmig ausgebildet sind, mit einer dem Inneren der Einstellöffnungen 2 zugeordneten Breitseite.

Gegenstand der Erfindung ist auch ein Traggestell, bei dem die Verbindungsstege 7, 8 einstückig in den gleichfalls streifenförmig ausgebildeten Umlaufgurt 5 übergehen, so daß der Umlaufgurt 5, mit Ausnahme seiner Eckbereiche, in gedachter Verlängerung einen Rechteckkonus 23 erzeugt.

Gegenstand der Erfindung ist auch ein Traggestell, bei dem öffnungsseitig in dem U-Profil Versteifungsrippen 13, 22, 34, 78 ausgebildet sind, die bezüglich eines Umfassungsrandes jeweils an einen Eckbereich angeformt sind.

Gegenstand der Erfindung ist auch ein Traggestell, bei dem Eckbereiche der unteren Öffnung 6 durch einen im wesentlichen dreiecksförmiges Bodenteil 18 abgedeckt sind.

Gegenstand der Erfindung ist auch ein Traggestell, bei dem die Einstellöffnungen und Öffnungen im wesentlichen quadratisch ausgebildet sind.

Gegenstand der Erfindung ist auch ein Traggestell, bei dem ein einen umlaufenden Außenrand des Traggestells 1 bildender U-Schenkel mit einer etwa doppelten vertikalen Länge ausgebildet ist als ein U-Schenkel im Inneren des Traggestells.

Gegenstand der Erfindung ist auch ein Traggestell, bei welchem ein eine Einstellöffnung 41 begrenzender Steg 42 entweder Teil eines Außenrandes des Traggestells 40 ist oder Teil einer Umrandung einer Zwischenöffnung 73, 74 zwischen zwei Einstellöffnungen 41 ist.

Gegenstand der Erfindung ist auch ein Traggestell, bei welchem eine Zwischenöffnung 11, 12 bei einer Länge, die einer Seitenlänge einer Einstellöffnung 2 etwa entspricht, im wesentlichen rechteckig ausgebildet ist.

Gegenstand der Erfindung ist auch ein Traggestell, bei welchem bei rechteckiger Ausbildung des Traggestells 1 insgesamt sich in Richtung einer Schmalseite gegenüberliegende Einstellöffnungen 2 durch eine Zwischenöffnung 12 beabstandet sind, deren schmalseitige Öffnungbreite dem Drei- bis Sechsfachen, vorzugsweise dem Vierfachen einer Stegbreite entspricht.

Gegenstand der Erfindung ist auch ein Traggestell, bei dem die Zwischenöffnungen 12 größerer Öffnungsbreite in Längsseitenerstreckung des Traggestells 1 in Abfolge hintereinander ausgebildet sind.

Gegenstand der Erfindung ist auch ein Traggestell, bei welchem eine Länge m der Zwischenöffnungen 12 größerer Breite etwa einer Seitenlänge oder der Hälfte einer Seitenlänge einer Einstellöffnung 2 entspricht.

Gegenstand der Erfindung, ist auch ein Traggestell, bei welchem die Eckverbindungsstege 8 gerundet sind.

Gegenstand der Erfindung ist auch ein Traggestell, bei welchem die Anordnung der Zwischenöffnung 11, 12 so gewählt ist, daß eine Schmalseite einer Zwischenöffnung 11 auf einen Steg zwischen zwei Zwischenöffnungen 12 trifft.

Gegenstand der Erfindung ist auch ein Traggestell, bei welchem jede Einstellöffnung 2 in bezug auf den Umlaufgurt 5 acht Verbindungsstege 7, 8 aufweist, nämlich in jedem Eckbereich und jeweils mittig zwischen zwei Eckbereichen einen Verbindungssteg.

Gegenstand der Erfindung ist auch ein Traggestell, bei welchem der Außenrand 44 an einem Abschnitt einen rückversetzten Etikettenabschnitt 70 ausbildet.

Gegenstand der Erfindung ist auch ein Traggestell, bei welchem der Etikettenabschnitt 70 in Öffnungsrichtung des U-Profils bzw. in Erstreckungsrichtung der Verbindungsstege, den Außenrand 44 überragt.

Gegenstand der Erfindung ist auch ein Traggestell, bei welchem der Etikettenabschnitt 70 mit einem zu dem Außenrand 44 unterschiedlichen Konuswinkel (Winkel Gamma') ausgebildet ist.

Gegenstand der Erfindung ist auch ein Traggestell, bei welchem an einer Einstellöffnung 41 Etikettenabschnitte 25 mittelpunktsymmetrisch ausgebildet sind.

Gegenstand der Erfindung ist auch ein Traggestell, bei welchem an dem Etikettenabschnitt seitlich und vorzugsweise auch unten T-Nutenführungen ausgebildet sind, für eine formschlüssige Halterung eines Preisschildes oder dergleichen. ist auch ein Traggestell, bei welchem zumindest in einem Griffbereich des äußeren Randes des Traggestells querverlaufende Rippen 30 in enger Nebeneinanderlage ausgebildet sind.

Gegenstand der Erfindung ist auch ein Traggestell, bei welchem ein Diagonalabstand u diagonal benachbarter Eckbereiche 47 in Höhe der Öffnungen 56 etwa einer Seitenlänge einer Einstellöffnung 41 bei im wesentlichen quadratischer Ausbildung derselben entspricht.

Gegenstand der Erfindung, ist auch ein Traggestell, bei welchem ein Abstand x zweier Eckbereiche 47 bzw. von im wesentlichen parallel zueinander verlaufenden Abschnitten des Umlaufgurtes im Bereich der Öffnung 56 von in Richtung einer Längsseite unmittelbar gegenüberliegenden Einstellöffnungen 41 etwa der Hälfte des Maßes u entspricht.

Gegenstand der Erfindung ist auch ein Traggestell, bei welchem die Körbchen durch kreuzweise verlaufende Freiräume unterschiedlicher Breite voneinander beabstandet sind.

Gegenstand der Erfindung ist auch ein Traggestell, bei welchem eine Begrenzungslinie 46, 48 der regulären Rechtecköffnung etwa die drei- bis fünffache Länge einer Seite des Vorsprungs 49 besitzt.

Gegenstand der Erfindung ist auch ein Traggestell, bei welchem die Begrenzungslinie 46 bzw. 48 etwa die dreifache Länge der größeren Seite 50 des Vorsprungs 49 besitzt.

Gegenstand der Erfindung ist auch ein Traggestell, bei welchem ein bodenseitiger Eckbereich einer Einstellöffnung 41 durch eine angeformte Bodenfläche 55 teilweise geschlossen ist.

Gegenstand der Erfindung ist auch ein Traggestell, bei welchem sich bodenseitig durch die angeformte Bodenfläche 55 eine Öffnung 56 ergibt, die gleichfalls im wesentlichen rechteckig ist, wobei jedoch die zugeordneten Längsseiten 59, 60 der bodenseitigen Öffnung 56 zu den Begrenzungslinien 46, 48 der Einstellöffnung 41 in einen Winkel Beta' von etwa 45° verlaufen.

Gegenstand der Erfindung ist auch ein Traggestell, bei welchem eine Längsseite 59, 60 des bodenseitigen Rechtecks beidseitig in eine sich zum Boden der Einstellöffnung 41 als Seitenwand 61 fortsetzende Längsseite 46, 48 des oberen Rechtecks einläuft.

Gegenstand der Erfindung ist auch ein Traggestell, bei welchem zwei Längsseiten 59, 60 des bodenseitigen Rechtecks, die sich in einer gedanklichen Verlängerung schneiden, derart in die Seitenwand 61 zwischen den beiden Enden dieser Längsseiten die Eckverbindung zwischen diesen Längsseiten 59, 60 bildet, wobei zwischen der Seitenwand 61 und jeder der Längsseiten 59, 60 jeweils ein stumpfer Winkel Gamma' bzw. Delta' eingeschlossen ist.

## Patentansprüche

1. Traggestell (1, 40) mit etwa rechteckigen Einstellöffnungen (2, 41) und dazwischen sich erstreckenden Stegen (3, 42), zur Aufnahme von insbesondere Pflanztöpfen, wobei die Stege (3, 42) die Einstellöffnungen (2, 41) umfassen und ein einseitig offenes U-Profil aufweisen, weiter ein Fassungsrand (4, 43) einer Einstellöffnung (2, 41) durch einen U-Schenkel des U-Profils gebildet ist, dadurch gekennzeichnet, daß in Öffnungsrichtung des U-Profils und beabstandet hierzu, zugeordnet einer Einstellöffnung (2, 41) ein Umlaufgurt (5) ausgebildet ist, der gleichfalls eine etwa rechteckige Öffnung (6, 56) begrenzt, und daß der Umlaufgurt (5) an das U-Profil über Verbindungsstege (7, 8) ausgehend von dem Fassungsrand (4, 43) einer Einstellöffnung (2, 41), angebunden ist.

2. Traggestell (1, 40) mit etwa rechteckigen Einstellöffnungen (2, 41) und dazwischen sich erstreckenden Stegen (3, 42), zur Aufnahme von insbesondere Pflanztöpfen, wobei die Stege (3, 42) die Einstellöffnungen (2, 41) umfassen und einen Fassungsrand (4, 43) einer Einstellöffnung (2, 41) ausbilden, dadurch gekennzeichnet, daß die Stege (3, 42) aus einem geschlossenen, vorzugsweise kreisförmig geschlossenen Hohlprofil gebildet sind, daß aus dem Profil Verbindungsstege (7, 8) herauswachsen und daß beabstandet zu dem Öffnungsrand, zugeordnet einer Einstellöffnung (2, 41), ein Umlaufgurt (5) ausgebildet ist, der gleichfalls eine etwa rechteckige Öffnung (6,56) begrenzt, und daß der Umlaufgurt (5) über die Verbindungsstege (7, 8) an das Profil gebunden ist.

3. Traggestell nach einem oder mehreren der vorhergehenden Ansprüche, dadurch gekennzeichnet, daß die Öffnung (6, 56) kleiner ist als die Einstellöffnung (2, 41).

4. Traggestell nach einem oder mehreren der vorhergehenden Ansprüche, dadurch gekennzeichnet, daß eine Eckausbildung zweier aufeinanderstoßender Begrenzungslinien (46, 48) einer rechteckigen Grundfläche (45) einer Einstellöffnung (41) als ein zum Inneren der Grundfläche (45) hinweisenden Vorsprung (49) gestaltet ist.

5. Traggestell nach Anspruch 4, dadurch gekennzeichnet, daß der Vorsprung (49) unterschiedlich lange Seiten (50, 51) aufweist.

6. Traggestell nach einem oder mehreren der vorhergehenden Ansprüche , dadurch gekennzeichnet, daß die Verbindungstege (7, 8) gegenüber einem regelmäßigen, durch die Eckbereiche der Einstellöffnung (2) aufgespannten Rechteck (10) mit unterschiedlichen Abständen angebunden sind.

7. Traggestell nach einem oder mehreren der vorhergehenden Ansprüche, dadurch gekennzeichnet, daß die Verbindungsstege (7, 8) mit einer Vertikalen (V) unterschiedliche Winkel Alpha, Beta einschließen.

8. Traggestell nach einem oder mehreren der vorhergehenden Ansprüche, dadurch gekennzeichnet, daß der Fassungsrand (4) der Einstellöffnung (2) gegenüber dem aufgespannten Rechteck (10) seitlich ausladende Bereiche (9) aufweist, derart, daß eine Stegbreite hierdurch vermindert ist, welche Bereiche (9) jeweils etwa seitenmittig zu dem Rechteck ausgebildet sind und von welchem die Verbindungsstege (7) ausgehen.

9. Traggestell nach Anspruch 1, dadurch gekennzeichnet, daß öffnungsseitig in dem U-Profil Versteifungsrippen (15, 16, 22) ausgebildet sind, die bezüglich eines Fassungsrandes (4) jeweils an einen Eckbereich angeformt sind.

10. Traggestell nach einem oder mehreren der vorhergehenden Ansprüche, dadurch gekennzeichnet, daß Eckbereiche der unteren Öffnung (6, 56) durch eine angeformte Bodenfläche (18, 55) teilweise geschlossen sind.

11. Traggestell nach einem oder mehreren der vorhergehenden Ansprüche, dadurch gekennzeichnet, daß ein eine Einstellöffnung (2) begrenzender Steg (3) entweder Teil eines Außenrandes des Traggestells (1) ist oder Teil einer Umrandung einer Zwischenöffnung (11, 12) zwischen zwei Einstellöffnungen (2).

12. Traggestell nach einem oder mehreren der vorhergehenden Ansprüche , dadurch gekennzeichnet, daß an dem Außenrand (26, 44) an einem Abschnitt ein Etikettenabschnitt (25, 70, 71) ausgebildet ist, der in Öffnungsrichtung des U-Profils bzw. in Erstreckungsrichtung der Verbindungsstege (7, 8) den Aussenrand (26, 44) überragt.

13. Traggestell nach Anspruch 12, dadurch gekennzeichnet, daß der Etikettenabschnitt (25, 70, 71) mit einem zu dem Außenrand (26, 44) unterschiedlichen Konuswinkel (Winkel Gamma') ausgebildet ist.

14. Traggestell nach Anspruch 12 oder 13, dadurch gekennzeichnet, daß an dem Etikettenabschnitt seitlich und vorzugsweise auch unten T-Nutenführungen ausgebildet sind, für eine formschlüssige Halterung eines Preisschildes (33) oder dergleichen.

15. Traggestell nach einem oder mehreren der vorhergehenden Ansprüche, dadurch gekennzeichnet, daß zumindest in einem Griffbereich (75, 76) des Außenrandes (26) des Traggestells querverlaufende Rippen (30, 77) in enger Nebeneinanderlage ausgebildet sind.

16. Traggestell nach einem oder mehreren der vorhergehenden Ansprüche, dadurch gekennzeichnet, daß sich bodenseitig durch angeformte Bodenflächen (55) eine Öffnung (56) ergibt, die gleichfalls im wesentlichen rechteckig ist, wobei jedoch die zugeordneten Längsseiten (59, 60) der bodenseitigen Öffnung (56) zu Begrenzungslinien (46, 48) der Einstellöffnung (41) in einem Winkel Beta' von etwa 45° verlaufen.

17. Traggestell nach einem oder mehreren der vorhergehenden Ansprüche, dadurch gekennzeichnet, daß eine Längsseite (59, 60) des bodenseitigen Rectecks beidseitig in eine sich am Boden der Einstellöffnung (41) als Seitenwand (61) fortsetzende Begrenzungslinie (46, 48) des oberen Rechtecks einläuft.

## Claims

1. Support framework (1, 40) with roughly rectangular insert openings (2, 41) and webs (3, 42) extending therebetween, for receiving in particular plant pots, the webs (3, 42) surrounding the inset openings (2, 41) and having a U-profile open at one end, and also a frame edge (4, 43), of an inset opening (2, 41) is formed by a one U-leg of the U-profile, characterised in that there is formed, in the opening direction of the U-profile and at a spacing therefrom, associated with an inset opening (2, 41) a surrounding strap (5), which likewise defines a roughly rectangular opening (6, 56), and in that the surrounding strap (5) is connected to the U-profile via connecting webs (7, 8) proceeding from the frame edge (4, 43) of an inset opening (2, 41).

2. Support framework (1, 40) with roughly rectangular insert openings (2, 41) and webs (3, 42) extending therebetween, for receiving in particular plant pots, the webs (3, 42) surrounding the inset openings (2, 41), and form a frame edge (4, 43) of an inset opening (2, 41), characterised in that the webs (3, 42) are formed from a closed, preferably circularly closed hollow profile, in that connecting webs (7, 8) project from the profile, and in that, at a spacing from the opening edge, associated with an inset opening (2, 41) there is formed a surrounding strap (5), which likewise defines a roughly rectangular opening (6, 56), and in that the surrounding strap (5) is connected to the profile by the connecting webs (7, 8).

3. Support framework according to one or more of the preceding claims, characterised in that the opening (6, 56) is smaller than the inset opening (2, 41).

4. Support framework according to one or more of the preceding claims, characterised in that a corner design of two abutting limit lines (46, 48) of a rectangular base surface (45) of an insert opening (41) is formed as a projection (49) directed towards the interior of the base surface (45).

5. Support framework according to claim 4, characterised in that the projection (49) has sides (50, 51) of different lengths.

6. Support framework according to one or more of the preceding claims, characterised in that the connecting webs (7, 8) are connected at different distances with respect to a regular rectangle (10) braced by the corner areas of the insert opening (2).

7. Support framework according to one or more of the preceding claims, characterised in that the connecting webs (7, 8) enclose with a vertical (V) different angles Alpha, Beta.

8. Support framework according to one or more of the preceding claims, characterised in that the frame edge (4) of the inset opening (2) has, with respect to the braced rectangle (10), laterally overhanging areas (9), so that a web width, is reduced thereby, said areas (9) being respectively formed roughly at the centre of the side of the rectangle, and from which the connecting webs (7) project.

9. Support framework according to claim 1, characterised in that there are formed on the opening side in the U-profile reinforcing ribs (15, 16, 22) which are respectively integrally formed on a corner area with respect to a frame edge (4).

10. Support framework according to one or more of the preceding claims, characterised in that corner areas of the lower opening (6, 56) are partly closed by a moulded-on base surface (18, 55).

11. Support framework according to one or more of the preceding claims, characterised in that a web (3) defining an inset opening (2) is either a part of an outer edge of the support framework (1) or part of a surround-ing edge of an intermediate opening (11, 12) between two inset openings (2).

12. Support framework according to one or more of the preceding claims, characterised in that there is formed on the outer edge (26, 44) on a section, a label section (25, 70, 71), which projects in the direction of the opening of the U-profile or in the extended direction of the connecting webs (7, 8) over the outer edge (26, 44).

13. Support framework according to claim 12, characterised in that the label section (25, 70, 71) is formed with an angle of conicity (angle Gamma') different from the outer edge (26, 44).

14. Support framework according to claim 12 or 13, characterised in that there are formed laterally on the label section and preferably also underneath, T-shaped groove guides, for positively securing a price ticket (33) or the like.

15. Support framework according to one or more of the preceding claims, characterised in that there are formed at least in one handle area (75, 76) of the outer edge (26) of the support framework, transversely-extending ribs (30, 77) in close vicinity to one another.

16. Support framework according to one or more of the preceding claims, characterised in that, by means of moulded-on base surfaces (55) on the base, an opening (56) results, which is likewise substantially rectangular, the associated longitudinal sides (59, 60) of the base-side opening (56) extending at an angle Beta' of about 45° to limiting lines (46, 48) of the inset opening (41).

17. Support framework according to one or more of the preceding claims, characterised in that one longitudinal side (59, 60) of the base-side rectangle runs on both sides into a limiting line (46, 48) of the upper rectangle continuing on the base of the inset opening (41) as a side wall (61).

## Revendications

1. Cadre-porteur (1, 40) comportant des ouvertures d'ajustement ou d'orientation(2, 41) à peu près rectangulaires et des nervures (3, 42) s'étendant entre ces ouvertures, pour recevoir en particulier des pots à végétaux, les nervures (3, 42) entourant les ouvertures d'ajustement (2, 41) et présentant un profilé en U ouvert d'un côté, en outre un bord de cerclage (4, 43) d'une ouverture d'ajustement (2, 41) étant constitué d'une branche du profilé en U, caractérisé en ce qu'une ceinture périphérique (5) associée à une ouverture d'ajustement (2, 41), qui délimite également une ouverture (6, 56) à peu près rectangulaire, est réalisée dans la direction d'ouverture du profilé en U et à distance de celui-ci, la ceinture périphérique délimitant également une ouverture (6, 56) à peu près rectangulaire et en ce que la ceinture périphérique (5) est reliée au profilé en U par l'intermédiaire de nervures de liaison (7, 8) partant de la bordure de cerclage (4, 43) d'une ouverture d'ajustement (2, 41).

2. Cadre-porteur (1, 40) comportant des ouvertures d'ajustement (2, 41) à peu près rectangulaires et des nervures (3, 42) s'étendant entre ces ouvertures, pour recevoir en particulier des pots à végétaux, les nervures (3, 42) entourant les ouvertures d'ajustement (2, 41) et constituant une bordure de cerclage (4, 43) d'une ouverture d'ajustement (2, 41), caractérisé en ce que les nervures (3, 42) sont constituées d'un profilé creux fermé, de préférence en forme de cercle, en ce qu'à partir du profil se développent des nervures de liaison (7, 8) et en ce qu'à distance du bord d'ouverture, est réalisée une ceinture périphérique (5) associée à une ouverture d'ajustement (2, 41) et qui délimite également une ouverture (6, 56) à peu près rectangulaire et en ce que la ceinture périphérique (5) est reliée au profil par l'intermédiaire des nervures de liaison (7, 8).

3. Cadre-porteur selon l'une ou plusieurs des revendications précédentes, caractérisée en ce que l'ouverture (6, 56) est inférieure à l'ouverture d'ajustement (2, 41).

4. Cadre-porteur selon l'une ou plusieurs des revendications précédentes, caractérisé en ce qu'un mode de réalisation de coin de deux lignes de délimitation (46, 48) se recouvrant, d'une surface de base (45) rectangulaire d'une ouverture d'ajustement (41), est réalisée sous la forme d'une partie en saillie (49) tournée vers l'intérieur de la surface de base (45).

5. Cadre-porteur selon la revendication 4, caractérisé en ce que la partie en saillie (49) présente des faces (50, 51) de longueurs différentes.

6. Cadre-porteur selon l'une ou plusieurs des revendications précédentes, caractérisé en ce que les nervures de liaison (7, 8) sont reliées, selon les espacements différents, vis-avis d'un rectangle régulier (10) dont la surface est couverte par les zones d'angle de l'ouverture d'ajustement (2).

7. Cadre-porteur selon l'une ou plusieurs des revendications précédentes, caractérisé en ce que les nervures de liaison (7, 8) font avec la verticale (V) des angles alpha, bêta différents.

8. Cadre-porteur selon l'une ou plusieurs des revendications précédentes, caractérisé en ce que le bord de cerclage (4) de l'ouverture d'ajustement (2) présente des zones (9) assurant une décharge latérale par rapport au rectangle (10) couvert, de manière que la largeur de nervure soit de ce fait diminuée ces zones (9) étant chacune réalisée à peu près à mi-longueur du côté du rectangle et les nervures de liaison (7) partant de celui-ci.

9. Cadre-porteur selon la revendication 1, caractérisé en ce que, du côté de l'ouverture dans le profilé en U, sont réalisés des nervures de rigidification (15, 16, 22) formées d'un seul tenant chacune sur une zone d'angle par rapport à une bordure de cerclage (4).

10. Cadre-porteur selon l'une ou plusieurs des revendications précédentes, caractérisé en ce que des zones d'angle de l'ouverture inférieure (6, 56) sont partiellement fermées par une surface de fond (18, 55) formée d'un seul tenant.

11. Cadre-porteur selon l'une ou plusieurs des revendications précédentes, caractérisé en ce qu'une nervure (3) délimitant une ouverture d'ajustement (2) fait partie soit d'une bordure extérieure du cadre-porteur (1) soit d'une bordure d'une ouverture intermédiaire (11, 12) prévue entre deux ouvertures d'ajustement (2).

12. Cadre-porteur selon l'une ou plusieurs des revendications précédentes, caractérisé en ce que, sur la bordure extérieure (26, 44), est réalisée sur un tronçon une section à étiquettes (25, 70, 71) qui fait saillie du bord extérieur (26, 44) dans la direction d'ouverture du profil U, ou dans la direction de l'étendue des nervures de liaison (7, 8).

13. Cadre-porteur selon la revendication 12, caractérisé en ce que la section à étiquettes (25, 70, 71) est réalisée avec un angle de cône (angle gamma') différent par rapport à la bordure extérieure (26, 44).

14. Cadre-porteur selon la revendication 12 ou 13, caractérisé en ce que sur la section à étiquettes sont réalisés latéralement et de préférence également vers le bas des guidages à rainure en T, pour une fixation avec ajustement de forme d'un écriteau de prix (33) ou analogue.

15. Cadre-porteur selon ou plusieurs des revendications précédentes, caractérisé en ce qu'au moins dans une zone de saisie (75, 76) de la bordure extérieure (26) du cadre-porteur, sont réalisées des nervures (30, 37), s'étendant transversalement et placées dans des positions proches les unes des autres.

16. Cadre-porteur selon l'une ou plusieurs des revendications précédentes, caractérisé en qu'une ouverture (56), qui est également sensiblement rectangulaire, est obtenue du côté du fond par des surfaces de fond (55) formées d'un seul tenant, les faces longitudinles (59, 60) associées de l'ouverture (56) située du côté du fond s'étendant selon un angle bêta' d'environ 45° par rapport à des lignes de délimitation (46, 48) appartenant à l'ouverture d'ajustement (41).

17. Cadre-porteur selon l'une ou plusieurs des revendications précédentes, caractérisé en qu'une face longitudinale (59, 60) du rectangle du côté au fond pénètre des deux côtés dans une ligne de délimitation (46, 48) appartenant au rectangle supérieur et se prolongeant à titre de paroi latérale (61) sur le fond de l'ouverture d'ajustement (41).
